# EUROPEAN PATENT APPLICATION

(11) **EP 4 794 264 A1**
(43) Date of publication of application: **19.08.2026**
(21) Application number: 24883949.0
(22) Date of filing: 19.06.2024
(51) Int. Cl.: H04L 9/40

(54) **NETWORK APPLICATION ACCESS METHOD AND RELATED DEVICE**

(30) Priority: 31.10.2023 CN 202311438238
(71) Applicant: HUAWEI TECHNOLOGIES CO., LTD., Shenzhen 518129 (CN)
(72) Inventor: WANG, Tao, Shenzhen, Guangdong 518129 (CN); ZHU, Xiaoming, Shenzhen, Guangdong 518129 (CN); SHEN, Yihua, Shenzhen, Guangdong 518129 (CN); ZHANG, Shumin, Shenzhen, Guangdong 518129 (CN)
(74) Representative: Goddar, Heinz J.
(86) International application number: PCT/CN2024/100000
(87) International publication number: WO 2025/091938

(57) **Abstract**

Embodiments of this application provide a network application access method and a related device. A security protection system receives a first packet from a terminal, where the first packet includes an application layer packet header, the application layer packet header in the first packet carries a first virtual IP address corresponding to a user identifier, the user identifier is an identifier of a user that logs in to the terminal, and the first virtual IP address is an IP address in a second network; the security protection system obtains a second packet based on the first packet, where the second packet includes an IP basic header, and a source IP address field in the IP basic header in the second packet carries the first virtual IP address; and the security protection system sends the second packet to a server. Embodiments of this application help reduce difficulty in tracing a user based on a source IP address in a packet.

## Description

This application claims priority to Chinese Patent Application No. 202311438238.8, filed with the China National Intellectual Property Administration on October 31, 2023 and entitled "NETWORK APPLICATION ACCESS METHOD AND RELATED DEVICE", which is incorporated herein by reference in its entirety.

### TECHNICAL FIELD

This application relates to the field of network security, and in particular, to a network application access method and a related device.

### BACKGROUND

With development of network technologies, a terminal deployed in a network (for example, an extranet) can access, by using a remote access technology, a network application provided by a server deployed in another network (for example, an intranet). When remote access is implemented through a secure sockets layer virtual private network (secure sockets layer virtual private network, SSL VPN), a virtual network adapter usually needs to be installed on the terminal. The virtual network adapter is a type of driver software. The virtual network adapter is configured to select an idle intranet IP address from an intranet internet protocol (internet protocol, IP) address pool, and configure the intranet IP address to the terminal. The terminal uses the configured intranet IP address as a source IP address to access the network application.

However, when the foregoing method is used, it is difficult to implement tracing, and it is difficult to trace, by using content of a packet, a user that initiates access.

### SUMMARY

Embodiments of this application provide a network application access method and a related device, to help reduce difficulty in tracing back a user based on a source IP address in a packet. Technical solutions are as follows.

According to a first aspect, a network application access method is provided, applied to a network system, where the network system includes a terminal, a security protection system, and a server providing a network application, the terminal is deployed in a first network, the server is deployed in a second network, the security protection system is configured to protect security of the server, and the method includes: The security protection system receives a first packet from the terminal, where the first packet includes an application layer packet header, the application layer packet header in the first packet carries a first virtual IP address corresponding to a user identifier, the user identifier is an identifier of a user that logs in to the terminal, and the first virtual IP address is an IP address in the second network; the security protection system obtains a second packet based on the first packet, where the second packet includes an IP basic header, and a source IP address field in the IP basic header in the second packet carries the first virtual IP address; and the security protection system sends the second packet to the server.

The application layer packet header in the packet initiated by the terminal carries the first virtual IP address corresponding to the identifier of the user that logs in to the terminal, and the source IP address field in the IP basic header in the packet sent by the security protection system to the server based on the packet carries the first virtual IP address. Therefore, the first virtual IP address carried in the source IP address in the packet sent by the security protection system to the server can locate the corresponding user identifier, which is equivalent to strongly binding the source IP address in the packet sent to the server to the user, thereby reducing difficulty in tracing the user based on the source IP address.

In addition, because the virtual IP address used as the source IP address belongs to the IP address in the second network in which the server is located, when an inbound packet from the server needs to be forwarded, only one inbound route needs to be configured for virtual IP addresses of all users. For example, a destination IP address of the inbound route is an IP address segment of a protected network including the virtual IP address, and a next hop of the inbound route is an IP address of the security protection system, without configuring an inbound route for a real IP address of each terminal. This reduces complexity of configuring the inbound route, and also reduces network overheads for distributing the inbound route.

In some implementations, the first packet further includes an IP basic header encapsulated in an outer layer of the application layer packet header, and that the security protection system obtains the second packet based on the first packet includes: The security protection system replaces content of a source IP address field in the IP basic header in the first packet with the first virtual IP address, to obtain the second packet.

The security protection system performs the action of replacing the source IP address, which means that when the packet is forwarded through the security protection system, the source IP address in the packet can be changed from the IP address in the first network to the IP address in the second network. Therefore, during transmission of the packet in the first network, the source IP address in the IP basic header does not need to carry the IP address in the second network, so that a device in the first network cannot become aware of the IP address in the second network based only on the source IP address carried in the IP basic header, effectively hiding a digital asset (IP address) of the second network. This reduces a security risk caused by an IP attack.

In some implementations, the first packet belongs to a first session, the first session is a session established between the terminal and the security protection system, and that the security protection system obtains the second packet based on the first packet includes: The security protection system replaces content of a source IP address field in an IP basic header in a subsequent packet of the first packet in the first session with the first virtual IP address, to obtain the second packet.

In some implementations, before the security protection system receives the first packet from the terminal, the method further includes: The security protection system receives an authentication request packet from the terminal, where the authentication request packet includes the user identifier; the security protection system performs authentication on the terminal based on the authentication request packet; in response to the terminal passing the authentication, the security protection system obtains the first virtual IP address based on the user identifier; and the security protection system sends the first virtual IP address to the terminal during an authorization process of the terminal.

The virtual IP address is delivered to the terminal based on an authentication result, and that the terminal passes the authentication is used as a prerequisite for delivering the virtual IP address. Therefore, trustworthiness of the IP address is improved to some extent, so that a terminal that does not pass identity authentication cannot access the network application by using the virtual IP address, thereby reducing a risk of initiating an attack by forging a source IP address, and improving security of an intranet application.

In addition, the security protection system performs virtual IP address allocation, and the terminal does not need to perform virtual IP address allocation. This reduces a risk of leaking an intranet address, and reduces a risk that security of an entire organization is compromised because an attacker sniffs a virtual network adapter by using a physical network adapter to steal data and deduce a network architecture or a new vulnerability of a network adapter program occurs.

In some implementations, that the security protection system obtains the first virtual IP address based on the user identifier includes: The security protection system searches a target correspondence based on the user identifier, to obtain the first virtual IP address, where the target correspondence includes the user identifier and the first virtual IP address.

The foregoing implementation facilitates unified management and planning of the correspondence between the user identifier and the virtual IP address by the security protection system.

In some implementations, that the security protection system obtains the first virtual IP address based on the user identifier includes: The security protection system sends the user identifier to a third-party authentication system; and the security protection system receives the first virtual IP address from the third-party authentication system.

Because the correspondence between the user identifier and the virtual IP address is stored in the third-party authentication system, the security protection system does not need to store the correspondence between the user identifier and the virtual IP address, thereby saving storage resources occupied by the correspondence between the user identifier and the virtual IP address in the security protection system.

In some implementations, that the security protection system sends the first virtual IP address to the terminal includes: The security protection system sends, to the terminal, the first virtual IP address and a resource list that the security protection system authorizes the user to access, where the resource list includes an identifier of the network application, an identifier of the server corresponding to the identifier of the network application, an IP address of a software-defined perimeter (software-defined perimeter, SDP) gateway, and a port number of the SDP gateway, and the terminal can access the network application based on the IP address of the SDP gateway and the port number of the SDP gateway.

The first virtual IP address and the resource list are delivered to the terminal together, which is equivalent to that two types of resources are delivered to the terminal at the same time through one authorization process: a virtual IP address of an access subject (the terminal), and an identifier of an access object (the network application and the SDP gateway). Therefore, overall efficiency of the authorization process is improved.

In some implementations, the authentication request packet includes a hypertext transfer protocol (hypertext transfer protocol, HTTP) request packet, and that the security protection system sends, to the terminal, the first virtual IP address and the resource list that the security protection system authorizes the user to access includes: The security protection system sends an HTTP response packet corresponding to the HTTP request packet to the terminal, where a response body in the HTTP response packet carries the first virtual IP address and the resource list.

Because the security protection system encapsulates the first virtual IP address and the resource list into a same packet, the terminal can obtain both the first virtual IP address and the resource list from the received packet, thereby improving overall efficiency of obtaining the first virtual IP address and the resource list.

In some implementations, the first packet is a hypertext transfer protocol connect (hypertext transfer protocol connect, HTTP connect) packet, the application layer packet header is an HTTP header, the HTTP header includes an X-Forwarded-For (XFF) field, and the first virtual IP address is carried in the X-Forwarded-For field.

The XFF field is used to carry the virtual IP address of the terminal, for example, the XFF field is used to carry a virtual IP address of an SDP client, so that a function of the XFF field matches a definition of the XFF field in a standard, and any hop of network device (for example, the SDP gateway) between the client and the server can learn, based on a field name of the XFF field, that content of the XFF field includes the IP address of the client. In this way, the solution can reuse a packet format of the HTTP header provided in the existing standard, thereby being more compatible with the standard, and reducing implementation complexity.

In some implementations, the first packet further includes an IP basic header encapsulated in an outer layer of the application layer packet header, a source IP address field in the IP basic header in the first packet carries an IP address of the terminal, and after the security protection system receives the first packet from the terminal, the method further includes: The security protection system saves a session relationship, where the session relationship includes the IP address of the terminal and the first virtual IP address.

Because the session relationship is stored, when the security protection system receives the inbound packet from the server, the security protection system searches the session relationship based on the virtual IP address carried in the inbound packet, to obtain the IP address of the terminal, so as to forward the inbound packet to the terminal based on the IP address of the terminal, thereby reducing a risk that the inbound packet cannot be routed to the terminal because the destination IP address in the inbound packet is the virtual IP address during forwarding.

In addition, when the security protection system receives a subsequent packet from the terminal, the security protection system searches the session relationship based on the IP address of the terminal carried in the subsequent packet, to obtain the virtual IP address, so as to replace the source IP address in the subsequent packet based on the virtual IP address, and forward the subsequent packet in which the source IP address is replaced with the virtual IP address to the server. This eliminates the need for the packet subsequently initiated by the terminal to carry the virtual IP address, thereby helping reduce packet transmission overheads.

In some implementations, after the security protection system sends the second packet to the server, the method further includes: The security protection system receives a third packet from the server, where the third packet includes an IP basic header, and a destination IP address field in the IP basic header in the third packet carries the first virtual IP address; the security protection system searches the session relationship based on the first virtual IP address, to obtain the IP address of the terminal; the security protection system obtains a fourth packet based on the IP address of the terminal and the third packet, where the fourth packet includes an IP basic header, and a destination IP address field in the IP basic header in the fourth packet carries the IP address of the terminal; and the security protection system sends the fourth packet to the terminal.

Because the source IP address in the uplink data packet is replaced with the first virtual IP address by the security protection system, the server returns the inbound packet by using the first virtual IP address as the destination IP address. The security protection system changes the destination IP address in the inbound packet from the first virtual IP address to the IP address of the terminal, so as to forward the packet to the terminal based on the IP address of the terminal, thereby reducing a risk of interruption of transmission of the packet caused by unreachable route of the first virtual IP address in the internet.

In some implementations, the terminal includes an SDP client, and the security protection system includes an SDP controller and an SDP gateway running in an access proxy mode.

In some implementations, the network system further includes an audit tracing system, and after the security protection system sends the second packet to the server, the method further includes: The audit tracing system determines the user identifier based on the first virtual IP address.

According to a second aspect, a network application access method, applied to a network system, where the network system includes a terminal, a security protection system, and a server providing a network application, the terminal is deployed in a first network, the server is deployed in a second network, the security protection system is configured to protect security of the server, and the method includes: The terminal sends an authentication request packet to the security protection system, where the authentication request packet includes a user identifier, and the user identifier is an identifier of a user that logs in to the terminal; the terminal receives a first virtual IP address corresponding to the user identifier from the security protection system during an authorization process of the terminal, where the first virtual IP address is an IP address in the second network; the terminal generates a first packet based on the first virtual IP address, where the first packet includes an application layer packet header, and the application layer packet header in the first packet carries the first virtual IP address; and the terminal sends the first packet to the security protection system.

The terminal obtains the virtual IP address corresponding to the user identifier by initiating authentication, and sends the virtual IP address delivered in the authorization process to the security protection system by adding the virtual IP address to the application layer packet header in the process of accessing the network application, so that the security protection system can obtain the first virtual IP address from the application layer packet header, and encapsulate the first virtual IP address into the source IP address field and send the source IP address field to the server. Because the source IP address in the packet sent by the security protection system to the server corresponds to the identifier of the user that logs in to the terminal, which is equivalent to strongly binding the source IP address in the packet to the user, difficulty in tracing the user based on the source IP address in the packet is reduced.

In some implementations, the first packet is an HTTP connect packet, the application layer packet header is an HTTP header, the HTTP header includes an X-Forwarded-For field, and the first virtual IP address is carried in the X-Forwarded-For field.

In some implementations, the security protection system includes an SDP gateway running in an access proxy mode, and that the terminal receives the first virtual IP address from the security protection system includes: The terminal receives, from the security protection system, the first virtual IP address and a resource list that the security protection system authorizes the user to access, where the resource list includes an identifier of the network application, an identifier of the server corresponding to the identifier of the network application, an IP address of the SDP gateway, and a port number of the SDP gateway, and the terminal can access the network application based on the IP address of the SDP gateway and the port number of the SDP gateway; correspondingly, that the terminal generates the first packet based on the first virtual IP address includes: The terminal generates the first packet based on the first virtual IP address, a proxy gateway list, and the resource list, where the first packet further includes an IP basic header and a transport layer protocol header, a destination address field in the IP basic header in the first packet includes the IP address of the SDP gateway, a destination port number field in the transport layer protocol header in the first packet includes the port number of the SDP gateway, the application layer packet header in the first packet further carries the identifier of the network application and the identifier of the server, the IP basic header is encapsulated in the transport layer protocol header and an outer layer of the application layer packet header, and the transport layer protocol header is encapsulated in the outer layer of the application layer packet header; and that the terminal sends the first packet to the security protection system includes: The terminal sends the first packet to the SDP gateway.

In some implementations, the authentication request packet includes an HTTP request packet, and that the terminal receives, from the security protection system, the first virtual IP address, the resource list that the security protection system authorizes the user to access, and the proxy gateway list that the security protection system authorizes the user to access includes:

The terminal receives an HTTP response packet corresponding to the HTTP request packet from the security protection system, where a response body in the HTTP response packet carries the first virtual IP address, the resource list, and the proxy gateway list.

According to a third aspect, a security protection system is provided, used in a network system, where the network system includes a terminal, the security protection system, and a server providing a network application, the terminal is deployed in a first network, the server is deployed in a second network, the security protection system is configured to protect security of the server, and the security protection system includes:
a receiving unit, configured to receive a first packet from the terminal, where the first packet includes an application layer packet header, the application layer packet header in the first packet carries a first virtual IP address corresponding to a user identifier, the user identifier is an identifier of a user that logs in to the terminal, and the first virtual IP address is an IP address in the second network;
a processing unit, configured to obtain a second packet based on the first packet, where the second packet includes an IP basic header, and a source IP address field in the IP basic header in the second packet carries the first virtual IP address; and
a sending unit, configured to send the second packet to the server.

In some implementations, the first packet further includes an IP basic header encapsulated in an outer layer of the application layer packet header, and the processing unit is configured to replace content of a source IP address field in the IP basic header in the first packet with the first virtual IP address, to obtain the second packet; or
the first packet belongs to a first session, the first session is a session established between the terminal and the security protection system, and the processing unit is configured to replace content of a source IP address field in an IP basic header in a subsequent packet of the first packet in the first session with the first virtual IP address, to obtain the second packet.

In some implementations, the receiving unit is further configured to receive an authentication request packet from the terminal, where the authentication request packet includes the user identifier;
the processing unit is further configured to perform authentication on the terminal based on the authentication request packet;
the processing unit is further configured to: in response to the terminal passing the authentication, obtain the first virtual IP address based on the user identifier; and
the sending unit is further configured to send the first virtual IP address to the terminal during an authorization process of the terminal.

In some implementations, the processing unit is configured to search a target correspondence based on the user identifier, to obtain the first virtual IP address, where the target correspondence includes the user identifier and the first virtual IP address.

In some implementations, the sending unit is further configured to send the user identifier to a third-party authentication system; and
the receiving unit is further configured to receive the first virtual IP address from the third-party authentication system.

In some implementations, the sending unit is configured to send, to the terminal, the first virtual IP address and a resource list that the security protection system authorizes the user to access, where the resource list includes an identifier of the network application, an identifier of the server corresponding to the identifier of the network application, an IP address of an SDP gateway, and a port number of the SDP gateway, and the terminal can access the network application based on the IP address of the SDP gateway and the port number of the SDP gateway.

In some implementations, the authentication request packet includes an HTTP request packet, and the sending unit is configured to send an HTTP response packet corresponding to the HTTP request packet to the terminal, where a response body in the HTTP response packet carries the first virtual IP address and the resource list.

In some implementations, the first packet is an HTTP connect packet, the application layer packet header is an HTTP header, the HTTP header includes an X-Forwarded-For field, and the first virtual IP address is carried in the X-Forwarded-For field.

In some implementations, the first packet further includes an IP basic header encapsulated in an outer layer of the application layer packet header, a source IP address field in the IP basic header in the first packet carries an IP address of the terminal, and after the security protection system receives the first packet from the terminal, the security protection system further includes:
a storing unit, configured to save a session relationship, where the session relationship includes the IP address of the terminal and the first virtual IP address.

In some implementations, the receiving unit is further configured to receive a third packet from the server, where the third packet includes an IP basic header, and a destination IP address field in the IP basic header in the third packet carries the first virtual IP address;
the processing unit is further configured to: search the session relationship based on the first virtual IP address, to obtain the IP address of the terminal; and obtain a fourth packet based on the IP address of the terminal and the third packet, where the fourth packet includes an IP basic header, and a destination IP address field in the IP basic header in the fourth packet carries the IP address of the terminal; and
the sending unit is further configured to send the fourth packet to the terminal.

In some implementations, the terminal includes an SDP client, and the security protection system includes an SDP controller and an SDP gateway running in an access proxy mode.

According to a fourth aspect, a terminal is provided, used in a network system, where the network system includes the terminal, a security protection system, and a server providing a network application, the terminal is deployed in a first network, the server is deployed in a second network, the security protection system is configured to protect security of the server, and the terminal includes:
a sending unit, configured to send an authentication request packet to the security protection system, where the authentication request packet includes a user identifier, and the user identifier is an identifier of a user that logs in to the terminal;
a receiving unit, configured to receive a first virtual IP address corresponding to the user identifier from the security protection system during an authorization process of the terminal, where the first virtual IP address is an IP address in the second network; and
a processing unit, configured to generate a first packet based on the first virtual IP address, where the first packet includes an application layer packet header, and the application layer packet header in the first packet carries the first virtual IP address, where
the sending unit is further configured to send the first packet to the security protection system.

In some implementations, the first packet is an HTTP connect packet, the application layer packet header is an HTTP header, the HTTP header includes an X-Forwarded-For field, and the first virtual IP address is carried in the X-Forwarded-For field.

In some implementations, the security protection system includes an SDP gateway running in an access proxy mode, and the receiving unit is configured to receive, from the security protection system, the first virtual IP address and a resource list that the security protection system authorizes the user to access, where the resource list includes an identifier of the network application, an identifier of the server corresponding to the identifier of the network application, an IP address of the SDP gateway, and a port number of the SDP gateway, and the terminal can access the network application based on the IP address of the SDP gateway and the port number of the SDP gateway;
correspondingly, the processing unit is configured to generate the first packet based on the first virtual IP address, a proxy gateway list, and the resource list, where the first packet further includes an IP basic header and a transport layer protocol header, a destination address field in the IP basic header in the first packet includes the IP address of the SDP gateway, a destination port number field in the transport layer protocol header in the first packet includes the port number of the SDP gateway, the application layer packet header in the first packet further carries the identifier of the network application and the identifier of the server, the IP basic header is encapsulated in the transport layer protocol header and in an outer layer of the application layer packet header, and the transport layer protocol header is encapsulated in the outer layer of the application layer packet header; and
the sending unit is configured to send the first packet to the SDP gateway.

In some implementations, the authentication request packet includes an HTTP request packet, and the receiving unit is configured to receive an HTTP response packet corresponding to the HTTP request packet from the security protection system, where a response body in the HTTP response packet carries the first virtual IP address, the resource list, and the proxy gateway list.

According to a fifth aspect, a security protection system is provided. The security protection system includes a processor, the processor is coupled to a memory, the memory stores at least one computer program instruction, and the at least one computer program instruction is loaded and executed by the processor, so that the security protection system implements the method provided in any one of the first aspect or the optional manners of the first aspect.

According to a sixth aspect, a terminal is provided. The terminal includes a processor, the processor is coupled to a memory, the memory stores at least one computer program instruction, and the at least one computer program instruction is loaded and executed by the processor, so that the terminal implements the method provided in any one of the second aspect or the optional manners of the second aspect.

According to a seventh aspect, a computer-readable storage medium is provided. The storage medium stores at least one instruction. When the instruction is run on a computer, the computer is enabled to perform the method provided in any one of the first aspect or the optional manners of the first aspect.

According to an eighth aspect, a computer-readable storage medium is provided. The storage medium stores at least one instruction. When the instruction is run on a computer, the computer is enabled to perform the method provided in any one of the second aspect or the optional manners of the second aspect.

According to a ninth aspect, a computer program product is provided. The computer program product includes one or more computer program instructions. When the computer program instructions are loaded and run by a computer, the computer is enabled to perform the method provided in any one of the first aspect or the optional manners of the first aspect.

According to a tenth aspect, a computer program product is provided. The computer program product includes one or more computer program instructions. When the computer program instructions are loaded and run by a computer, the computer is enabled to perform the method provided in any one of the second aspect or the optional manners of the second aspect.

According to an eleventh aspect, a chip is provided, including a memory and a processor. The memory is configured to store computer instructions. The processor is configured to invoke the computer instructions from the memory and run the computer instructions, to perform the method according to any one of the first aspect or the possible implementations of the first aspect.

According to a twelfth aspect, a chip is provided, including a memory and a processor. The memory is configured to store computer instructions. The processor is configured to invoke the computer instructions from the memory and run the computer instructions, to perform the method according to any one of the second aspect or the optional manners of the second aspect.

According to a thirteenth aspect, a network system is provided. The network system includes the security protection system according to any one of the third aspect or the optional manners of the third aspect and the terminal according to any one of the fourth aspect or the optional manners of the fourth aspect.

According to a fourteenth aspect, a network system is provided. The network system includes the security protection system according to any one of the fifth aspect or the optional manners of the fifth aspect and the terminal according to any one of the sixth aspect or the optional manners of the sixth aspect.

Based on the implementations provided in the foregoing aspects, this application may further combine technologies in this application to provide more implementations.

### BRIEF DESCRIPTION OF DRAWINGS

FIG. 1 is a diagram of an architecture of a network system according to an embodiment of this application;
FIG. 2 is a schematic flowchart of a network application access method according to an embodiment of this application;
FIG. 3 is a diagram of accessing a network application in an SDP zero-trust scenario according to an embodiment of this application;
FIG. 4 is a diagram of a structure of an SDP gateway according to an embodiment of this application;
FIG. 5A and FIG. 5B are a diagram of accessing a network application in an SDP zero-trust scenario according to an embodiment of this application;
FIG. 6 is a diagram of a structure of a security protection system according to an embodiment of this application;
FIG. 7 is a diagram of a structure of a terminal according to an embodiment of this application;
FIG. 8 is a diagram of a structure of a security protection system according to an embodiment of this application; and
FIG. 9 is a diagram of a structure of a terminal according to an embodiment of this application.

### DESCRIPTION OF EMBODIMENTS

To make objectives, technical solutions, and advantages of this application clearer, the following further describes implementations of this application in detail with reference to the accompanying drawings.

The following explains and describes some terms and concepts in embodiments of this application.

### (1) First network and second network

Some implementations of this application are applied to a scenario in which data communication is performed across networks, for example, applied to a scenario in which source IP address translation is performed when a packet is transmitted between two networks. To distinguish between different networks, the following uses "the first network" to describe a network in which a terminal is located, and uses "the second network" to describe a network in which a server is located. The first network is, for example, an untrusted network. In an example, the first network is the internet, a mobile communication data network, a public wireless local area network (wireless local area network, WLAN) network, or a local area network (such as a home intranet). The second network is, for example, a trusted network. For example, the second network is a local area network. The local area network is also referred to as a private network or an intranet. In an example, the second network is an enterprise intranet or a school intranet. Embodiments focus on a scenario in which the server is located in the intranet for description.

### (2) Real IP address and virtual IP address

The real IP address is also referred to as a physical IP address. The real IP address is an IP address directly bound to hardware (such as a physical network adapter or a network interface) that supports communication in a device. For example, the real IP address is an IP address configured for the network interface of the device. For example, when a destination IP address in a packet carries a real IP address of a device, the packet can be forwarded, based on the real IP address through IP routing, to a network interface bound to the real IP address on the device, and enters the device through the network interface. The virtual IP address is a concept relative to the real IP address. The virtual IP address is an IP address that is not directly bound to hardware. For example, the virtual IP address is created and managed by a management plane (for example, a controller such as an SDP controller) of a network. The real IP address can be routed in a wide area network, while the virtual IP address can be routed in a controlled network. For example, in embodiments of this application, the virtual IP address can be routed only in a protected network in which an SDP gateway is located.

### (3) User identifier

A form of the user identifier in embodiments of this application is, for example, any data that can identify a user identity and that can be processed by a computer. The user identifier may also be referred to as an identity credential, which is used to prove the user identity. For example, the user identifier includes an account and/or a password. The account is, for example, a user name, an email address, an ID card number, an employee ID, or a name of a department to which a user belongs. For another example, the user identifier includes a biometric feature of the user. The biometric feature includes at least one of a face image, a feature vector of the face image, a fingerprint feature, or a voiceprint feature. For another example, the user identifier includes an SMS message (for example, a verification code). For another example, the user identifier includes a certificate (public key). For another example, the user identifier includes an SMS message (for example, a verification code). For another example, the user identifier includes a device identifier of a terminal used by the user. The device identifier of the terminal is, for example, a unique identifier of the terminal. The device identifier of the terminal includes a medium access control (medium access control, MAC) address of the terminal, an IP address of the terminal, an international mobile subscriber identity (international mobile subscriber identity, IMSI) of the terminal, a mobile station international ISDN number (mobile station international ISDN number, MSISDN) of the terminal, or an international mobile equipment identity (international mobile equipment identity, IMEI) of the terminal. The device identifier of the terminal can be used to uniquely identify the terminal, and the device identifier of the terminal is generated based on a parameter of hardware of the terminal. For example, the terminal uses information such as a primary hard drive serial number, a network adapter MAC address, and/or a central processing unit (central processing unit, CPU) serial number of the terminal as primary key information, and then generates the device identifier of the terminal with reference to a current timestamp and a hash value generated based on a random number.

### (4) Outbound and inbound

In embodiments, outbound and inbound are two data transmission directions. Outbound is a transmission direction in which a terminal is used as a source and a server is used as a destination, and inbound is a transmission direction in which a terminal is used as a destination and a server is used as a source. For example, an outbound packet is a packet sent from the terminal to the server, and an inbound packet is a packet sent from the server to the terminal. The outbound packet is also referred to as an uplink packet, and the inbound packet is also referred to as a downlink packet. An outbound route is a routing entry with an IP address of the server as a destination IP address, and an inbound route is a routing entry with an IP address of the terminal as a destination IP address.

### (5) Network application

The network application is also referred to as a network resource. The network application is an application that a terminal needs to remotely access through a network. For example, the network application is provided by a server or a server cluster. The terminal needs to interact with the server when accessing the network application. For example, when a user triggers an operation on the network application, the terminal sends an access request to the server in response to the operation of the user, and the server performs processing based on the access request, and returns a response result to the terminal. For example, the network application is an application based on a client/server (client/server, C/S) architecture or an application based on a browser/server (browser/server, B/S) architecture. For example, the network application includes a world wide web (world wide web, web) application, a mail application, a file storage and sharing application, a remote desktop application, or an instant messaging application.

### (6) Terminal

The terminal (terminal) is a hardware device that supports a human-machine interaction function. A type of the terminal includes but is not limited to a mobile phone, a tablet computer, a notebook computer, a desktop computer, a car, a vehicle-mounted terminal, a wearable device, a palmtop game host, and the like. The terminal is also referred to as user equipment (user equipment, UE), an intelligent terminal, a mobile terminal, a user device (user device), or a terminal device (terminal equipment). In embodiments, the terminal mainly acts as an access subject, and the terminal is deployed in a first network.

### (7) Security protection system

The security protection system is configured to protect security of a server providing a network application. Optionally, the security protection system includes a plurality of devices that work together. Alternatively, the security protection system may be an independent device. For example, the security protection system is a network device. In some implementations, the security protection system includes a network device and a controller.

The network device mainly acts as an intermediary between a terminal and the server. The network device is configured to forward a packet between the terminal and the server. The network device may also be referred to as a forwarding device or a communication device. The network device is deployed between a first network and a second network. For example, the network device is deployed at a border of the second network. For example, the network device is an ingress node of the second network. The network device includes but is not limited to integration of one or more of the following: a firewall, a security gateway (such as a router or a switch), an intrusion detection system (intrusion detection system, IDS) device, an intrusion prevention system (intrusion prevention system, IPS) device, a unified threat management (unified threat management, UTM) device, an anti-virus (anti-virus, AV) device, a distributed denial-of-service attack (distributed denial-of-service attack, DDoS) (anti-DDoS) device, and a next generation firewall (next generation firewall, NGFW).

The controller is configured to perform identity authentication on the terminal and authorize the terminal based on an authentication result. The controller may also be referred to as an authentication node. In some implementations, the controller is a general-purpose compute device, and the compute device implements a function of the controller by running management software. In some other implementations, the controller is a hardware device specially configured to undertake network control and management functions.

In some implementations, the network device and the controller are integrated, and the network device and the controller are integrated into a same physical device. In some implementations of this application, a process is described by using an example in which the network device and the controller are separately deployed. When the network device and the controller are integrated, both steps performed by the network device and steps performed by the controller are performed by a device into which the network device and the controller are integrated. For example, when the controller is integrated into the network device, the steps performed by the controller are actually performed by the network device.

In some implementations, when the network device and the controller are separately deployed, the network device and the controller are different physical devices that communicate with each other. For example, the network device is disposed in a general-purpose network device such as a router, a switch, or a firewall or a dedicated network device, while the controller is disposed in a server that communicates with the network device. The server implements a function of the controller by running software that supports control and management plane functions.

### (8) Hypertext transfer protocol connect (hypertext transfer protocol connect, HTTP connect) packet

The HTTP connect packet is a packet used to establish a tunnel in the hypertext transfer protocol (hypertext transfer protocol, HTTP). The HTTP connect packet is equivalent to a preorder packet of a data packet (also referred to as a service packet). For example, a method field in a request line in the HTTP connect packet includes character string connect. The HTTP connect packet optionally does not carry service data, and the HTTP connect packet optionally does not include an HTTP packet body.

### (9) X-Forwarded-For (XFF)

The XFF field is a field in an HTTP header. The XFF field is proposed in RFC 7239 in 2014. The XFF field, as defined in the standard, is used to carry an IP address of a client for tracing. For details about the definition of the XFF field, refer to https://datatracker.ietf.org/doc/html/rfc7239.

### (10) Software-defined perimeter (software-defined perimeter, SDP)

The SDP is a technology that controls terminal access to a resource based on identity authentication. The SDP creates a security boundary based on a policy, to isolate a protected server from an untrusted network. The SDP hides the protected server behind an SDP gateway, making it difficult for an attacker to know a location of the protected server, thereby increasing attack difficulty. The SDP technology mainly includes an identity authentication process, an authorization process, a packet forwarding process, and a registration process. An SDP system architecture includes three main components: an SDP client, the SDP gateway, and an SDP controller. Both the SDP client and the SDP gateway may be referred to as an SDP host.

### (11) SDP client

The SDP client is software installed on a terminal. The SDP client is configured to initiate an authentication request to an SDP controller or an SDP gateway, to perform an identity authentication process. The SDP client is further configured to establish an HTTP encrypted tunnel with the SDP gateway, to transmit a data packet to the SDP gateway through the HTTP encrypted tunnel. Optionally, the SDP client includes a local agent (agent) program. The local agent program is configured to process a packet sent to the SDP gateway and a packet from the SDP gateway.

### (12) SDP controller

The SDP controller functions as the brain of the SDP. The SDP controller is mainly configured to perform identity authentication on an SDP client based on an authentication request from the SDP client, and perform authorization on the SDP client after the identity authentication succeeds.

### (13) SDP gateway

The SDP gateway is disposed between an SDP client and a protected server (or network application). The SDP gateway is equivalent to an intermediary between the SDP client and the SDP gateway. When the SDP client needs to access a protected network application, the SDP client needs to pass through the SDP gateway. The SDP gateway enables an accessible port on the SDP gateway for an authorized user, and disables all ports for an unauthorized user.

### (14) Single packet authorization (single packet authorization, SPA) authentication

The SPA authentication is an authentication technology, which is mainly used to implement the principle of "authentication before connection" in the SDP zero-trust field. The SPA authentication is also referred to as door knocking authentication, where "door" is equivalent to a port, and "door knocking" is equivalent to accessing a port of an SDP component (SDP gateway and/or SDP controller). The SPA authentication is equivalent to a pre-authentication mechanism used before a connection is established between SDP components. Only when an SDP client passes SPA authentication, which is equivalent to that the SDP client successfully knocks on the door, the SDP component (SDP gateway and/or SDP controller) enables a port that the SDP client requests to access, so that the SDP client can access the port. When the SDP client fails the SPA authentication, which is equivalent to that the SDP client fails to knock on the door, the SDP component (SDP gateway and/or SDP controller) disables the port that the SDP client requests to access, so as to forbid the SDP client to access the port of the SDP component. According to the SDP specifications drafted by the cloud security alliance (cloud security alliance, CSA), an SPA authentication packet generally includes a device identifier (identifying a terminal running the SDP client), a random number, an SPA key (password), and an IP address of the SDP client. In a process in which the SDP client sends the SPA authentication packet, the SDP client generates a first SPA key based on a shared key and a random number by using an HMAC-based one-time password (hmac-based one-time password, HOTP) algorithm defined based on RFC 4266. The SDP client encapsulates all of the first SPA key, the device identifier, the random number, and the source IP address into the SPA authentication packet and sends the SPA authentication packet to the SDP controller. After the SDP controller receives the SPA authentication packet, the SDP controller generates a second SPA key based on the shared key and the random number carried in the SPA authentication packet by using the HOTP algorithm. The SDP controller performs, based on the generated second SPA key, a consistency check on the first SPA key carried in the SPA authentication packet. If the first SPA key is consistent with the second SPA key, the SDP controller determines that the SDP authentication succeeds, and the SDP controller enables a destination port to be accessed by the SDP client, and allows the SDP client to access the port. If the first SPA key is inconsistent with the second SPA key, the SDP controller determines that the SDP authentication fails. The SPA authentication packet is, for example, a user datagram protocol (user datagram protocol, UDP) packet or a transmission control protocol (transmission control protocol, TCP) packet. For the definition of the SPA authentication and the content of the SPA authentication packet, refer to the SDP specifications drafted by the cloud security alliance (CSA).

### (15) SDP authentication

The SDP authentication is, for example, an interface authentication-based manner. In an example of performing SDP authentication, an SDP client displays an authentication interface. A user triggers an input operation on the authentication interface. The SDP client receives a first user identifier entered on the authentication interface. The SDP client generates an SDP authentication request based on the first user identifier. The SDP authentication request includes the first user identifier. The SDP client generates the SDP authentication request based on the first user identifier. The SDP client sends the SDP authentication request to an SDP controller. The SDP controller receives the SDP authentication request. The SDP controller performs a consistency check based on the first user identifier carried in the SDP authentication request and a second user identifier prestored in the SDP controller. If the consistency check on the first user identifier succeeds, the SDP controller determines that the SDP client passes the SDP authentication. If the consistency check on the first user identifier fails, the SDP controller determines that the SDP client fails the SDP authentication.

The SDP authentication manner includes at least one of authentication based on a user name and/or a password, authentication based on a certificate (public key), authentication based on a biometric feature, authentication based on an SMS message (for example, a verification code), and authentication based on a device identifier of a terminal.

When the SDP authentication manner includes authentication based on a user name and/or a password, the first user identifier includes the user name and/or the password. When the SDP authentication manner includes authentication based on a certificate (public key), the first user identifier includes the certificate (public key). When the SDP authentication manner includes authentication based on a biometric feature, the first user identifier includes the biometric feature. When the SDP authentication manner includes authentication based on an SMS message (for example, a verification code), the first user identifier includes the SMS message (for example, the verification code). When the SDP authentication manner includes authentication based on a device identifier of a terminal, the first user identifier includes the device identifier of the terminal.

The authentication interface is used to perform SDP authentication. The authentication interface is, for example, a world wide web (world wide web, web) interface (web page). The authentication interface includes an input control and a submit button. The input control is an interface control used to enter the first user identifier, and the submit button is an interface control used to confirm to submit the first user identifier to the SDP controller. The user can enter the first user identifier by triggering an input operation on the input control, and the user can trigger a submission instruction by clicking the submit button. The submission instruction instructs the SDP client to send the first user identifier to the SDP controller. The SDP client sends, to the SDP controller in response to the submission instruction, the first user identifier received based on the input control. The authentication interface is, for example, a login interface. For example, the submit button on the authentication interface is a login button.

For example, when the SDP authentication manner includes authentication based on a user name and/or a password, the authentication interface displayed on the SDP client includes a user name input control, a password input control, and the submit button. The user name input control is a form control for the user to enter the user name. The user name input control and the password input control are usually input boxes. The password input control is a form control for the user to enter the user name. The password input control is usually a text box. The submit button is used to trigger the submission instruction. In an example of performing SDP authentication based on the user name and/or the password, on the authentication interface, the user enters the user name in the user name input box, enters the password in the password input box, and clicks the submit button, to trigger the submission instruction. The SDP client sends the user name and the password to the SDP controller in response to the submission instruction. The SDP controller performs identity authentication on the SDP client based on the user name and the password received from the SDP client.

For another example, when the SDP authentication manner includes authentication based on a face image, the authentication interface includes a shoot button and a submit button. In an example of performing SDP authentication based on the face image, the user clicks the shoot button displayed on the authentication interface, to trigger a shooting instruction. The SDP client takes the face image in response to the shooting instruction. The user clicks the submit button displayed on the authentication interface, to trigger the submission instruction. The SDP client sends the face image to the SDP controller in response to the submission instruction. The SDP controller performs identity authentication on the SDP client based on the face image received from the SDP client.

The authentication interface includes a hypertext markup language (hypertext markup language, HTML) file, a cascading style sheets (cascading style sheets, CSS) file, and a JavaScript file. The interface control is implemented, for example, by using program code.

The SDP authentication request is, for example, an HTTP request packet or a hypertext transfer protocol secure (Hypertext Transfer Protocol Secure, HTTPS) request packet.

In some implementations, the authentication interface used to perform SDP authentication is sent by the SDP controller to the SDP client. For example, the SDP controller sends the JavaScript file or the HTML file of the authentication interface to the SDP client in response to receiving the authentication request from the SDP client. The SDP client parses the JavaScript file or the HTML file through a browser, to obtain code of the authentication interface. The SDP client renders the authentication interface in the browser based on the code of the authentication interface, to display the authentication interface.

### (16) Relationship between SPA authentication and SDP authentication

Generally, an SDP controller first performs SPA authentication on an SDP client, and when the SDP client passes the SPA authentication, the SDP controller further performs SDP authentication on the SDP client. In some implementations, in an initial login scenario, the SDP controller performs SPA authentication on a terminal, and when the terminal passes the SPA authentication, the SDP controller further performs SDP authentication on the terminal. In a non-initial login scenario, the SDP controller does not need to perform SPA authentication on the SDP client, but the SDP controller performs SDP authentication on the SDP client.

### (17) Packet forwarding of an SDP gateway

A packet forwarding process of the SDP gateway includes forwarding of an outbound packet and forwarding of an inbound packet. The forwarding of the outbound packet means that the SDP gateway forwards a packet from a terminal to a server providing a network application. The forwarding of the inbound packet means that the SDP gateway forwards a packet from the server providing the network application to the terminal. A packet forwarding mode of the SDP gateway includes a transparent forwarding mode and an access proxy mode.

In the transparent forwarding mode, the SDP gateway does not change a source IP address and a destination IP address in a packet in a process of forwarding the packet. For example, in a process in which the SDP gateway forwards the outbound packet or the inbound packet, a source IP address in a packet sent by the SDP gateway is the same as a source IP address in a packet received by the SDP gateway, and a destination IP address in the packet sent by the SDP gateway is the same as a destination IP address in the packet received by the SDP gateway.

In the access proxy mode, the SDP gateway updates a source IP address and a destination IP address in a packet in a process in which the SDP gateway forwards the packet. For example, in a process in which the SDP gateway forwards the outbound packet or the inbound packet, a source IP address in a packet sent by the SDP gateway is different from a source IP address in a packet received by the SDP gateway, and a destination IP address in the packet sent by the SDP gateway is different from a destination IP address in the packet received by the SDP gateway.

In some implementations, an encrypted tunnel is established between the SDP gateway and an SDP client, and a packet sent by the SDP client to the SDP gateway includes a tunnel header corresponding to the encrypted tunnel. When the SDP gateway receives the packet from the SDP client, the SDP gateway first decapsulates the tunnel header, and then forwards the packet encapsulated in an inner layer of the tunnel header to the server in the transparent forwarding mode or the access proxy mode. For example, when the SDP gateway uses the transparent forwarding mode, after decapsulating the tunnel header, the SDP gateway does not need to further process the packet in the inner layer of the tunnel header, and forwards the packet in the inner layer to the server based on an IP address of the server carried in a destination IP address in an IP basic header in the packet in the inner layer. When the SDP gateway uses the access proxy mode, after decapsulating the tunnel header, the SDP gateway replaces a destination IP address in an IP basic header in the packet in the inner layer of the tunnel header with an IP address of the server, replaces a source IP address in the IP basic header in the packet in the inner layer of the tunnel header with an IP address of the SDP gateway, and forwards the packet in the inner layer with the destination IP address and the source IP address replaced to the server. When the SDP gateway receives a packet from the server, if the SDP gateway uses the transparent forwarding mode, the SDP gateway does not need to modify the received packet, encapsulates a tunnel header into the received packet, and then forwards the packet including the tunnel header to the SDP client; or if the SDP gateway uses the access proxy mode, the SDP gateway replaces a source IP address in an IP basic header in the received packet with an IP address of the SDP gateway, replaces a destination IP address in the IP basic header in the received packet with an IP address of the terminal, encapsulates a tunnel header into the packet with the destination IP address and the source IP address replaced, and forwards the packet including the tunnel header, the destination IP address, and the source IP address to the SDP client.

### (18) Third-party authentication system

The third-party authentication system is, for example, a system having an authentication function other than an SDP controller and an SDP gateway. For example, the third-party authentication system includes an authentication server. For example, the third-party authentication system includes a remote authentication dial-in user service (remote authentication dial-in user service, RADIUS) server, a dynamic host configuration protocol (dynamic host configuration protocol, DHCP) server, a security identifier (securid, SecurID), an active directory (active directory, AD), and a lightweight directory access protocol (lightweight directory access protocol, LDAP) server.

### (19) SDP authorization process

The SDP authorization process includes: An SDP controller sends, to an SDP client, a resource list that the SDP controller authorizes the SDP client to access.

The resource list indicates one or more network resources included in an access permission range of the SDP client. For example, the resource list includes an identifier of the one or more network resources that the SDP controller authorizes the SDP client to access. The identifier of the network resource includes, for example, at least one of an IP address of the network resource, a domain name of the network resource, a uniform resource locator (uniform resource locator, URL) of the network resource, a name of the network resource, and an icon of the network resource. The SDP controller sends the resource list to the SDP client, which is equivalent to authorizing the SDP client to access a network resource corresponding to an identifier of each network resource in the resource list.

In some implementations, the resource list includes an application list. The application list includes an identifier of one or more network applications that the SDP controller authorizes the SDP client to access and an identifier of a server corresponding to an identifier of each network application. The identifier of the network application in the application list includes an icon of the network application and a name of the network application. The identifier of the server in the application list identifies a server providing a corresponding network application. For example, the identifier of the server in the application list includes at least one of an IP address of the server providing the network application, a domain name of the server providing the network application, and a URL of the network application. The SDP controller sends the application list to the SDP client, which is equivalent to authorizing the SDP client to access a server corresponding to an identifier of each network application in the application list.

When the identifier of the network application delivered by the SDP controller to the SDP client in the authorization process includes the IP address of the server providing the network application, the SDP client can access, based on the IP address of the server in the application list through the SDP gateway, the network application provided by the server. In a possible implementation in which the SDP client accesses the network application by using the IP address of the server delivered in the authorization process, the SDP client encapsulates the IP address of the server into a destination IP address field in an IP basic header in an inner layer of a packet, or the SDP client encapsulates the IP address of the server into an HTTP header or an HTTP request line in an inner layer of a packet, so that the packet sent by the SDP client to the SDP gateway carries the IP address of the server. Therefore, the SDP gateway can forward the packet from the SDP client to the server based on the IP address of the server carried in the packet, so that the SDP client can access the network application provided by the server.

When the identifier of the network application delivered by the SDP controller to the SDP client in the authorization process includes the domain name of the network application, the SDP client can access the network application based on the domain name of the network application in the application list through the SDP gateway. For example, in a process of accessing the network application by the SDP client, the SDP client obtains an IP address of the network application through domain name system (domain name system, DNS) resolution based on the domain name of the network application, and then the SDP client accesses the network application by using the IP address of the network application obtained through DNS resolution.

When the identifier of the network application delivered by the SDP controller to the SDP client in the authorization process includes the icon of the network application, if a user clicks the icon of the network application displayed on the SDP client, the SDP client can generate an access request in response to the click operation, and send the access request to the SDP gateway, so as to trigger the SDP gateway to perform a packet forwarding process.

For example, the URL of the network application delivered by the SDP controller to the SDP client in the authorization process includes the IP address of the network application or the domain name of the network application. For example, as shown in Table 1, a URL of an online game is http://192.168.0.1/index.html, where 192.168.0.1 is an IP address of a server providing the online game. For another example, a URL of an online game is https://www.example.com/index.html, where www.example.com is a domain name of a server providing the online game.

**Table 1 Resource list**

| Name of a network application | URL of a network application (including an IP address of the network application or a domain name of the network application) |
|---|---|
| Patent management system | https://www.mypatent.com/index.html |
| Online game | http://192.168.0.1/index.html |

In some implementations, the resource list further includes a proxy gateway list, and the proxy gateway list includes an identifier of one or more SDP gateways that the SDP controller authorizes the SDP client to access. The identifier of the SDP gateway in the proxy gateway list identifies the SDP gateway that can access a corresponding network application. The SDP client can access the network application based on the identifier of the SDP gateway. For example, an HTTPS encrypted tunnel is established between the SDP client and the SDP gateway, and the identifier of the SDP gateway is encapsulated into a tunnel header corresponding to the HTTPS encrypted tunnel, so that in a process of forwarding a packet encapsulated with the tunnel header between the SDP client and the SDP gateway, the identifier of the SDP gateway indicates that the packet is to be sent to the SDP gateway or the packet is from the SDP gateway.

In some implementations in which the SDP client accesses the network application based on the identifier of the SDP gateway, the SDP client establishes an HTTPS encrypted tunnel with the SDP gateway based on the identifier of the SDP gateway, and the SDP client sends, to the SDP gateway through the HTTPS encrypted tunnel, a packet sent to the network application. In an example, the SDP client encapsulates the identifier of the SDP gateway into a tunnel header corresponding to the HTTPS encrypted tunnel in an outer layer of the packet, so that the tunnel header in the packet sent by the SDP client to the SDP gateway carries the identifier of the SDP gateway. Therefore, an intermediate node through which the HTTPS encrypted tunnel between the SDP client and the SDP gateway passes can forward the packet to the SDP gateway based on the identifier of the SDP gateway.

In some implementations, the identifier of the SDP gateway in the proxy gateway list includes an IP address of the SDP gateway and a port number of the SDP gateway. The IP address of the SDP gateway is an IP address used by the SDP gateway to communicate with the SDP client. The port number of the SDP gateway identifies a port used by the SDP gateway to communicate with the SDP client. A terminal can access the network application based on the IP address of the SDP gateway and the port number of the SDP gateway. For example, both the IP address of the SDP gateway and the port number of the SDP gateway are encapsulated into a tunnel header corresponding to an HTTPS encrypted tunnel established between the SDP client and the SDP gateway, so that a packet is forwarded between the SDP client and the SDP gateway based on the IP address of the SDP gateway and the port number of the SDP gateway. Optionally, the IP address of the SDP gateway in the proxy gateway list is a virtual IP address of the SDP gateway, and the port number of the SDP gateway in the proxy gateway list is a virtual port number of the SDP gateway.

In some implementations in which the SDP client accesses the network application based on the IP address of the SDP gateway and the port number of the SDP gateway, in a process in which the SDP client accesses the network application, the tunnel header corresponding to the HTTPS encrypted tunnel established between the SDP client and the SDP gateway includes a TCP header and an IP basic header, and the SDP client encapsulates the IP address of the SDP gateway into a destination IP address field in the IP basic header in the tunnel header in an outer layer of the packet, the SDP client encapsulates the port number of the SDP gateway into a destination port number field in the TCP header in the tunnel header in the outer layer of the packet, so that the tunnel header in the packet sent by the SDP client to the SDP gateway carries the IP address of the SDP gateway and the port number of the SDP gateway. Therefore, an intermediate node through which the HTTPS encrypted tunnel between the SDP client and the SDP gateway passes can forward the packet to the SDP gateway based on the IP address of the SDP gateway carried in the tunnel header, and the SDP gateway can receive the packet from the SDP client based on the virtual port number carried in the packet.

In some implementations, the resource list delivered by the SDP controller in the authorization process includes both the application list and the proxy gateway list. In addition, there is a mapping relationship between the proxy gateway list in the resource list and the application list in the resource list. The SDP client can access, based on the identifier of the SDP gateway in the proxy gateway list, a network application corresponding to the SDP gateway in the application list. For example, the resource list includes a correspondence between the identifier of the network application (the IP address of the server providing the network application or the domain name of the server providing the network application) and the identifier of the SDP gateway (the IP address of the SDP gateway and the virtual port number of the SDP gateway).

Optionally, the resource list uses a key-value (key-value) format, the identifier of the network application is a key of the resource list, and the identifier of the SDP gateway is a value corresponding to the key in the resource list. When the SDP client needs to access a network application, the SDP client searches for an identifier of an SDP gateway corresponding to the network application by using an identifier of the network application as a key, and sends a data flow with the network application as a destination to the SDP gateway. Because an identifier of a network application in the resource list is associated with an identifier of an SDP gateway, it is possible to specify an SDP gateway through which each network application is proxied, so that a data flow of each network application is forwarded through a corresponding SDP gateway, thereby meeting requirements of more network deployment scenarios.

For a specific example of the resource list delivered by the SDP controller in the authorization process, refer to Table 2. The resource list shown in Table 2 includes identifiers of two network applications and identifiers of two SDP gateways respectively corresponding to the two network applications. A patent management system and an online game shown in Table 2 are specific examples of the two network applications. The resource list includes a correspondence between a URL of the patent management system (https://www.mypatent.com/index.html, including a domain name of the patent management system), an IP address 10.19.10.100 of the SDP gateway, and a port number 8443 of the SDP gateway. The resource list also includes a correspondence between a URL of the online game (http://192.168.0.1/index.html, including an IP address of the network application), an IP address 10.19.20.200 of the SDP gateway, and a port number 5060 of the SDP gateway.

**Table 2 Resource list**

| Application list | | Proxy gateway list | |
|---|---|---|---|
| Name of a network application | URL of a network application | IP address of an SDP gateway | Port number of an SDP gateway |
| Patent management system | https://www.mypatent.com/index.html | 10.19.10.100 | 8443 |
| Online game | http://192.168.0.1/index.html | 10.19.20.200 | 5060 |

With reference to the specific examples provided in Table 2, in some implementations, after the SDP client receives the application list from the SDP controller, the SDP client displays an icon of the patent management system and an icon of the online game in an interface. The URL https://www.mypatent.com/index.html of the patent management system is displayed in the icon of the patent management system, and the IP address http://192.168.0.1/index.html of the online game is displayed in the icon of the online game. When the user clicks the icon of the patent management system displayed in the interface of the SDP client, in response to receiving the click operation of the user by the SDP client, the SDP client obtains, based on the URL https://www.mypatent.com/index.html of the patent management system by using a DNS, an IP address of a server providing the patent management system, the SDP client encapsulates the IP address of the server providing the patent management system into an HTTP header or an HTTP request line located in an inner layer of an HTTPS encrypted tunnel header in a packet, the SDP client encapsulates the IP address 10.19.10.100 of the SDP gateway into a destination address field in an IP basic header included in the HTTPS encrypted tunnel header, the SDP client encapsulates the port number 8443 of the SDP gateway into a destination port number field in a TCP header included in the HTTPS encrypted tunnel header, and the SDP client sends an encapsulated packet to the SDP gateway, so as to access the patent management system by using the packet.

In some implementations, after the SDP controller successfully authenticates an identity of the SDP client, the SDP controller further sends a unique identifier of the terminal on which the SDP client is located, a destination port number of the SDP gateway, and an IP address of the terminal to the SDP gateway in the authorization process. The unique identifier of the terminal is used by the SDP gateway to check the packet from the terminal when forwarding the packet. The destination port of the SDP gateway is a port that can be accessed by the terminal in the SDP gateway. The IP address of the terminal is a source IP address of traffic allowed by the SDP gateway. When receiving the access request from the SDP client, the SDP gateway can perform a consistency check based on a source IP address in the access request and the IP address of the terminal delivered by the SDP controller in the authorization process, to determine whether the source IP address in the access request is valid, and perform a consistency check based on a destination port number in the access request and the destination port number of the SDP gateway delivered by the SDP controller in the authorization process, to determine whether the destination port number in the access request is valid, so as to forward the access request to a protected network application when both the source IP address and the destination port number are valid, thereby allowing the SDP client that sends the access request to access the protected network application.

In a specific example, when the user clicks the icon of the online game displayed in the interface of the SDP client, in response to receiving the click operation of the user by the SDP client, the SDP client obtains, based on the URL http://192.168.0.1/index.html of the online game, an IP address 192.168.0.1 of a server providing the online game, the SDP client encapsulates the IP address 192.168.0.1 of the server providing the online game into an HTTP header or an HTTP request line located in an inner layer of an HTTPS encrypted tunnel header in a packet, the SDP client encapsulates the IP address 10.19.20.200 of the SDP gateway into a destination address field in an IP basic header included in the HTTPS encrypted tunnel header, the SDP client encapsulates the port number 5060 of the SDP gateway into a destination port number field in a TCP header in the HTTPS encrypted tunnel header, and the SDP client sends an encapsulated packet to the SDP gateway, so as to access the online game by using the packet.

### (20) SDP registration process

The SDP registration process may also be referred to as an SDP initial permission configuration process or an application release process. In some implementations, SDP registration includes an identifier of a registered network application, an identifier of a server providing the network application, and a user identifier list. The identifier of the registered network application includes an icon of the network application and a name of the network application. The identifier of the registered server includes an IP address of the server or a domain name of the server. The user identifier list includes an identifier of at least one user that has permission to access the network application.

In a possible implementation of the identifier of the registered network application, an SDP controller presents a configuration interface to a user. The configuration interface includes input controls such as an input box of the identifier of the network application, a drop-down menu, and a select button. The user enters the identifier of the network application in the input control in the configuration interface. The SDP controller obtains the identifier of the to-be-registered network application based on the input operation performed by the user in the configuration interface. An implementation of registering other information is similar.

In some implementations, the SDP registration further includes an identifier of an SDP gateway corresponding to the registered network application. The identifier of the registered SDP gateway includes a virtual IP address of the SDP gateway that enables access to the network application and a virtual port number of the SDP gateway that enables access to the network application. In some implementations, the identifier of the registered SDP gateway further includes a management IP address of the SDP gateway and a management port of the SDP gateway.

The management IP address of the SDP gateway is an IP address used by the SDP gateway to communicate with the SDP controller. The management port of the SDP gateway identifies a port used by the SDP gateway to communicate with the SDP controller. The management IP address of the SDP gateway and the management port of the SDP gateway are registered on the SDP controller, so that the SDP controller interacts with the SDP gateway based on the management IP address and the management port.

### (21) Relationship between an authentication process (SPA or SDP), an authorization process, and a registration process in SDP

The registration process is a preset process before the authentication process and the authorization process. The authentication process and the authorization process depend on an identifier of a network application registered on an SDP controller, an identifier of a server providing the network application, and a user identifier list. In the SDP authentication process, when the SDP controller receives an SDP authentication request from a terminal, the SDP controller matches a user identifier carried in the SDP authentication request with the registered user identifier list, and in response to the user identifier hitting the user identifier list, and a consistency check on a first user identifier carried in the SDP authentication request succeeding, the SDP controller can deliver the identifier of the registered network application and the identifier of the server providing the network application to an SDP client as content of a resource list in an authorization phase.

In addition, by using the SDP registration process, a management IP address of an SDP gateway and a management port of the SDP gateway are registered on the SDP controller. After the SPA authentication succeeds, the SDP controller sends control signaling to the SDP gateway based on the management IP address of the SDP gateway and the management port of the SDP gateway, and the control signaling indicates the SDP gateway to enable a virtual port that can access the network application, so that the SDP gateway enables the virtual port, thereby allowing the SDP client to send a packet sent to the network application to the virtual port of the SDP gateway to access the network application.

That the authentication succeeds in the authentication process is a prerequisite for the authorization process. For example, after the SDP client passes the SDP authentication, the SDP controller sends the resource list to the SDP client. When SDP client fails the SDP authentication, the SDP controller refuses to send the resource list to the SDP client, thereby reducing a security risk caused to the server when an unauthorized SDP client obtains the resource list.

The following describes an application scenario of embodiments of this application by using an example.

Embodiments of this application are applicable to a scenario in which a terminal remotely accesses an intranet server through a network device in the field of network security protection, and in particular, to a scenario in which an SDP client accesses, through an SDP gateway, a server providing an intranet resource (for example, a network application) in the SDP zero-trust field. A security protection system replaces a source IP address in a packet sent by the terminal to the intranet server with a specific virtual IP address, where the virtual IP address corresponds to an identifier of a user that logs in to the terminal. Therefore, the corresponding user identifier can be located based on the virtual IP address carried in the source IP address in the packet sent by the security protection system to the intranet server, to trace the specific user accessing the intranet server. In addition, because the virtual IP address used as the source IP address belongs to an intranet IP address, configuration complexity caused by configuring an inbound route for a real IP address of each terminal on the internet is reduced.

In a remote access scenario, the real IP address of the terminal usually changes dynamically, making it difficult to perform tracing based on the real IP address of the terminal. For example, in a scenario in which the terminal accesses a network resource based on a mobile data communication network, according to the stipulation in the 3GPP standard TS23401-i20 "3rd Generation Partnership Project; Technical Specification Group Services and System Aspects; General Packet Radio Service (GPRS) enhancements for Evolved Universal Terrestrial Radio Access Network (E-UTRAN) access(Release 18)" document, when the terminal accesses the network resource via internet protocol version 6 (Internet Protocol version 6, IPv6), a network side allocates an IPv6 address to the terminal by using a stateless address allocation mechanism, so that the IPv6 address of the terminal changes dynamically. Therefore, if the source IP address in the packet sent by the security protection system to the intranet server is the real IP address of the terminal, it is difficult to perform tracing. Further, a plurality of network address translations (network address translation, NAT) may exist between the terminal and the security protection system, which further increases tracing difficulty.

Based on this, in some implementations of this application, because the virtual IP address corresponding to the identifier of the user that logs in to the terminal is allocated to the terminal based on the correspondence between the user identifier and the virtual IP address, after the security protection system replaces the source IP address in the packet sent by the terminal to the intranet server with the virtual IP address corresponding to the user identifier, the source IP address in the packet sent to the intranet server is strongly bound to the user, thereby reducing difficulty of tracing the user based on the source IP address in the packet.

Optionally, if a mechanism in which a plurality of users in a secure sockets layer virtual private network (secure sockets layer virtual private network, SSL VPN) reuse all IP addresses in an address pool is used, IP addresses of different users may be duplicate, and consequently a specific user cannot be located based on one IP address. Based on this, in some implementations of this application, one virtual IP address corresponds to one user identifier in the correspondence between the user identifier and the virtual IP address, so that virtual IP addresses corresponding to different user identifiers are not duplicate. Therefore, a unique user identifier can be located based on one virtual IP address, thereby improving tracing accuracy and facilitating auditing.

In the remote access scenario, terminals scattered in different places may access the intranet server by using different network environments, for example, a terminal A in a home accesses, by using a home router, a network application A provided by the intranet server, a terminal B in a public WLAN network such as a cafe or a campus accesses, by using a public WLAN network, the network application A provided by the intranet server, and a terminal C accesses, by using a mobile communication data network, the network application A provided by the intranet server. As a result, a total quantity of real IP addresses of all terminals that access intranet network applications is large. If the source IP address in the packet sent by the security protection system to the intranet server is still the real IP address of the terminal, source IP addresses in packets transmitted in an intranet may be IP addresses of different networks. In a scenario in which the terminal and the intranet server access to each other, to meet a requirement for the intranet server to return a packet to the terminal, a large quantity of inbound routes need to be configured on the intranet server for real IP addresses of a large quantity of terminals, where a destination IP address in each inbound route is a real IP address of a corresponding terminal, and the intranet server further needs to distribute the large quantity of inbound routes in the intranet, so that each hop of node on a forwarding path from the security protection system to the intranet server can obtain an inbound route. In this way, a packet returned by the server to each terminal is forwarded to the corresponding terminal based on the inbound route, and even an inbound route needs to be configured and distributed for a temporarily accessed terminal. Consequently, network configuration complexity is high, and network overheads caused by distributing an inbound route are huge.

Based on this, in some implementations of this application, because a virtual IP address allocated by the security protection system to each user is an intranet IP address (private IP address), for example, a corresponding virtual IP address is allocated from an intranet IP address segment to each user that is to access a network application, after the security protection system replaces a source IP address in a packet initiated by each terminal with a virtual IP address of a corresponding user, the source IP address in the packet from each terminal sent to the intranet server belongs to an intranet IP address. Therefore, when an inbound packet from the server needs to be forwarded, only one inbound route needs to be configured for the virtual IP address of each user. For example, a destination IP address in the inbound route is an intranet IP address segment including the virtual IP address, and a next hop of the inbound route is an IP address of the security protection system, without configuring an inbound route for a real IP address of each terminal. This reduces complexity of configuring an inbound route, and also reduces network overheads for distributing an inbound route.

There are a plurality of types of virtual IP addresses. In some implementations, the virtual IP address allocated by the security protection system to the user is an internet protocol version 4 (Internet Protocol version 4, IPv4) address, so that the IPv4 address can be used as the source IP address to access the network application. This is applicable to a scenario in which the network application supports communication based on an IPv4 protocol. In some other implementations, the virtual IP address allocated by the security protection system to the user is an IPv6 address, so that the IPv6 address can be used as the source IP address to access the network application based on an IPv6 protocol. This is applicable to a scenario in which the network application supports communication based on the IPv6 protocol. In still some implementations, in a scenario in which the network application supports both communication based on an IPv4 protocol and communication based on an IPv6 protocol, the virtual IP address allocated by the security protection system to the user is a dual-stack IP address, and the virtual IP address includes an IPv4 address and an IPv6 address, so that not only the IPv4 address can be used as the source IP address to access the network application, but also the IPv6 address can be used as the source IP address to access the network application. This is applicable to a scenario in which the network application supports both communication based on the IPv4 protocol and communication based on the IPv6 protocol.

For example, the correspondence between the user identifier and the virtual IP address is shown in Table 3.

**Table 3 Correspondence between a user identifier and a virtual IP address**

| Scenario | User identifier | IP address of a terminal (source IP address) | Virtual IP address | IP address of an intranet server (destination IP address) |
|---|---|---|---|---|
| IPv4 service | User 1 | 202.62.1.100 | 192.168.20.11 | 192.168.10.100 |
| IPv6 service | User 2 | 640b:843c:1:a::100 | 540b:843c:1:a::100 | 440b:843c:1:a::100 |
| Dual-stack service | User 3 | 202.62.1.101 | 192.168.5.101 | 192.168.1.101 |
| | | 640b:843c:1:a::101 | 540b:843c:1:a::101 | 440b:843c:1:a::101 |

With reference to Table 3, in a specific example, in a scenario in which the intranet server provides the IPv4 service, the user identifier User 1 corresponds to the virtual IP address 192.168.20.11 in a form of an IPv4 address in the correspondence between the user identifier and the virtual IP address. When User 1 initiates access subsequently, the security protection system uses the virtual IP address 192.168.20.11 as the source IP address to access the intranet server whose IP address is 192.168.10.100. In addition, when an audit tracing system obtains the packet sent by the security protection system to the intranet server, the audit tracing system can locate the user identifier User 1 based on the virtual IP address 192.168.20.11 carried in the source IP address in the packet and the correspondence between the virtual IP address 192.168.20.11 and the user identifier User 1, so as to learn that a user that triggers access to the intranet server whose IP address is 192.168.10.100 is User 1, thereby tracing the specific user.

With reference to Table 3, in a specific example, in a scenario in which the intranet server provides the IPv6 service, the user identifier User 2 corresponds to the virtual IP address 540b:843c:1:a::100 in a form of an IPv6 address. When User 2 initiates access subsequently, the security protection system uses the virtual IP address 540b:843c:1:a::100 in a form of an IPv6 address as the source IP address to access the intranet server whose destination IP address is 440b:843c:1:a::100. In addition, when the audit tracing system obtains the packet sent by the security protection system to the intranet server, the audit tracing system can locate the user identifier User 2 based on the virtual IP address 540b:843c:1:a::100 carried in the source IP address in the packet and the correspondence between the virtual IP address 540b:843c:1:a::100 and the user identifier User 2, so as to learn that a user that triggers access to the intranet server whose IP address is 440b:843c:1:a::100 is User 2, thereby tracing the specific user.

With reference to Table 3, in a specific example, in a scenario in which the intranet server provides the IPv4 service and the IPv6 service, the user identifier User 3 corresponds to the virtual IP address 192.168.5.101 in a form of an IPv4 address and the IPv6 address 540b:843c: 1:a::101 in the correspondence between the user identifier and the virtual IP address. When User 3 initiates access subsequently, the security protection system can not only use the virtual IP address 192.168.5.101 in a form of an IPv4 address as the source IP address to access the intranet server whose destination IP address is 192.168.1.101, but also can use the virtual IP address 540b:843c:1:a::101 in a form of an IPv6 address as the source IP address to access the intranet server whose destination IP address is 440b:843c:1:a::101. In addition, when the audit tracing system obtains the packet sent by the security protection system to the intranet server, the audit tracing system can locate the user identifier User 3 based on the virtual IP address 540b:843c:1:a::101 carried in the source IP address in the packet and the correspondence between the virtual IP address 540b:843c:1:a::101 and the user identifier User 3, so as to learn that a user that triggers access to the intranet server whose IP address is 440b:843c:1:a::101 is User 3, thereby tracing the specific user. The audit tracing system can locate the user identifier User 3 based on the virtual IP address 192.168.5.101 carried in the source IP address in the packet and the correspondence between the virtual IP address 192.168.5.101 and the user identifier User 3, so as to learn that a user that triggers access to the intranet server whose IP address is 192.168.1.101 is User 3, thereby tracing the specific user.

In some implementations, a virtual IP address corresponding to a user identifier and an IP address of a server cluster in which a network application that the security protection system authorizes the user identifier to access is located belong to a same network (for example, a local area network). In some implementations, a virtual IP address corresponding to a user identifier belongs to a network in which an IP address of a server cluster in which a network application that the user identifier has permission to access is located is located. In some implementations, a type of a virtual IP address corresponding to a user identifier is determined based on a type of an IP address of a server in which a network application that the user identifier has permission to access is located. In some implementations, the security protection system allocates, based on a type of an IP address registered for a network application, a virtual IP address of a same type to each user identifier in a user identifier list that is registered for the network application and that has permission to access the network application. The security protection system allocates virtual IP addresses to all users from an intranet IP address segment to which IP addresses of network applications belong. This facilitates network planning and reduces network configuration complexity. In addition, the security protection system performs virtual IP address allocation, and the terminal does not need to perform virtual IP address allocation. This reduces a risk of leaking an intranet address, and reduces a risk that security of an entire organization is compromised because an attacker sniffs a virtual network adapter by using a physical network adapter to steal data and deduce a network architecture or a new vulnerability of a network adapter program occurs.

In an example, in an application registration phase, a network administrator registers with the security protection system for an IP address of a server in which a network application A is located as an IPv4 address 192.168.0.0, and registers a user identifier list having permission to access the network application A, where the user identifier list includes User 1, User 2, and User 3. In this case, the security protection system selects, from an IPv4 address segment 192.168.0.0/24, three idle IP addresses as virtual IP addresses respectively allocated to User 1, User 2, and User 3. In an example, in an application registration phase, a network administrator registers with the security protection system for an IP address of a server in which a network application B is located as an IPv6 address 2001:db8::1/128, and registers a user identifier list having permission to access the network application B, where the user identifier list includes User 1, User 2, and User 3. In this case, the security protection system selects, from an IPv6 address segment 2001:db8::/32, three idle IPv6 addresses as virtual IP addresses respectively allocated to User 1, User 2, and User 3.

In some implementations, one user identifier corresponds to one virtual IP address in the correspondence between the user identifier and the virtual IP address. In other words, the correspondence between the user identifier and the virtual IP address is a one-to-one relationship. Alternatively, one user identifier corresponds to a plurality of virtual IP addresses in the correspondence between the user identifier and the virtual IP address. In other words, the correspondence between the user identifier and the virtual IP address is a one-to-many relationship. For example, when a network application supports a dual-stack service, one user identifier corresponds to two virtual IP addresses. One virtual IP address corresponding to the user identifier is in a form of an IPv4 address, and the security protection system can access the network application by using the IPv4 address as a source IP address through an IPv4 link. The other virtual IP address corresponding to the user identifier is in a form of an IPv6 address, and the security protection system can access the network application by using the IPv6 address as a source IP address through an IPv6 link. For another example, when one user identifier has permission to access a first network application and a second network application, the first network application is provided by a server in a first local area network, and the second network application is provided by a server in a second local area network, the user identifier corresponds to a virtual IP address in the first local area network and a virtual IP address in the second local area network.

In some implementations, the security protection system performs IP address translation between two networks, so as to hide an intranet IP address and reduce a risk of an IP attack.

In an example, a terminal serving as an access initiator is located in the first network, a server serving as an access destination is located in the second network, a source IP address carried in an IP basic header in a data packet received by the security protection system from the terminal is an IP address in the first network, and the security protection system replaces the source IP address carried in the IP basic header in the data packet with a virtual IP address in the second network, so that the source IP address in the IP basic header does not need to carry the IP address in the second network during transmission of the data packet in the first network. In this way, a device in the first network cannot become aware of the IP address in the second network based only on the source IP address carried in the IP basic header, which is equivalent to hiding a digital asset (IP address) in the second network, thereby reducing a security risk caused by an IP attack.

In another example, the source IP address carried in the IP basic header in the data packet received by the security protection system from the terminal is an IP address in the first network, a destination IP address carried in the IP basic header is also an IP address in the first network (for example, a virtual IP address of the security protection system), and the security protection system not only replaces the source IP address carried in the IP basic header in the data packet with a virtual IP address in the second network, but also replaces the destination IP address carried in the IP basic header in the data packet with an IP address of the server in the second network. Because both the source IP address and the destination IP address are replaced, neither the source IP address nor the destination IP address in the IP basic header needs to carry the IP address in the second network during transmission of the data packet in the first network, so that the device in the first network cannot become aware of the IP address in the second network based only on the source IP address and the destination IP address carried in the IP basic header, thereby hiding a digital asset (IP address) in the second network more effectively, and further reducing a security risk caused by an IP attack.

In some implementations, after the terminal (for example, the SDP client) passes identity authentication, the security protection system sends the virtual IP address corresponding to the user identifier to the terminal in the authorization process. The virtual IP address is delivered to the terminal based on an identity authentication result, and that the terminal passes the identity authentication is used as a prerequisite for delivering the virtual IP address, for example, the security protection system delivers the virtual IP address corresponding to the user identifier to the terminal only when the terminal passes the identity authentication, and the security protection system does not deliver the virtual IP address corresponding to the user identifier to the terminal when the terminal fails the identity authentication. Therefore, compared with an address allocation technology such as the dynamic host configuration protocol (dynamic host configuration protocol, DHCP) that does not provide an authentication function, this implementation improves trustworthiness of the IP address to some extent, so that a terminal that does not pass identity authentication cannot access the network application by using the virtual IP address, thereby reducing a risk of initiating an attack by forging a source IP address, and improving security of an intranet application.

In some implementations, after the terminal passes the SPA authentication and/or the SDP authentication, the security protection system sends the virtual IP address corresponding to the user identifier to the terminal in the authorization process. Because the virtual IP address is delivered with reference to the result of the SPA authentication and/or the SDP authentication that is unique in the SDP zero-trust scenario, this solution is more applicable to the SDP zero-trust scenario while improving security of the virtual IP address, thereby reducing complexity of implementing tracing by using this solution in the SDP zero-trust scenario.

In some implementations, when the terminal passes the SPA authentication and the SDP authentication, the security protection system sends the virtual IP address corresponding to the user identifier to the terminal in the authorization process. When the terminal fails the SPA authentication or the SDP authentication, the security protection system refuses to send the virtual IP address corresponding to the user identifier to the terminal. When either of the SPA authentication and the SDP authentication fails, the security protection system does not deliver the virtual IP address, thereby further improving security of the virtual IP address, and reducing a security risk caused by stealing of the virtual IP address by an attacker to an intranet.

In some implementations, the security protection system first performs SPA authentication on the terminal. When the SPA authentication succeeds, the security protection system further performs SDP authentication on the terminal. When the SDP authentication succeeds, the security protection system delivers the virtual IP address to the terminal.

In some implementations, in an initial login scenario, the security protection system first performs SPA authentication on the terminal, and when the terminal passes the the SPA authentication, the security protection system further performs SDP authentication on the terminal. When the SDP authentication succeeds, the security protection system delivers the virtual IP address to the terminal. In a non-initial login scenario, the security protection system does not need to perform SPA authentication, and when the terminal passes the SDP authentication, the security protection system delivers the virtual IP address to the terminal.

In some implementations, in a process in which the terminal initiates access, the terminal encapsulates the virtual IP address of the terminal into an XFF field in an application layer packet header in a packet. When a plurality of hops of intermediate nodes exist between the client and the server, the XFF field may carry an IP address of a previous hop of node. Therefore, tracing based on content of the XFF field depends on authenticity of the IP address of the previous hop of node. If NAT exists on the network, the IP address carried in the XFF field is an IP address after the NAT. As a result, the IP address of the terminal cannot be determined based on the content of the XFF field. Based on this, in some implementations of this application, the XFF field is used to carry the virtual IP address of the terminal, for example, the XFF field is used to carry a virtual IP address of an SDP client, so that a function of the XFF field matches a definition of the XFF field in a standard, and any hop of network device (for example, the SDP gateway) between the client and the server can learn, based on a field name of the XFF field, that content of the XFF field includes the IP address of the client. In this way, this solution can reuse a packet format of the HTTP header provided in the existing standard, thereby being more compatible with the standard, and reducing implementation complexity.

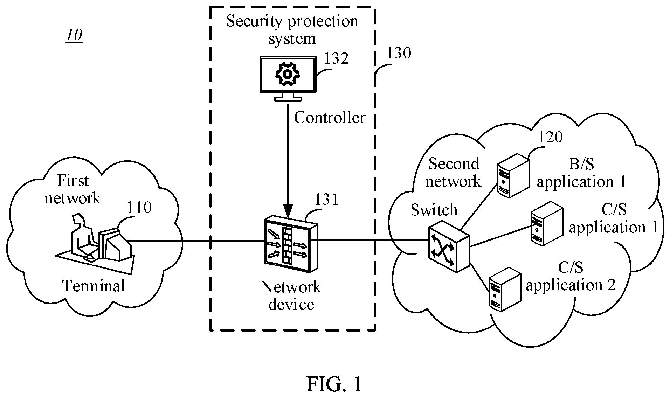

FIG. 1 is a diagram of an architecture of a network system 10 according to an embodiment of this application. The network system 10 shown in FIG. 1 includes a terminal 110, a security protection system 130, and a server 120. The terminal 110 is located in a first network. The server 120 is located in a second network. The security protection system 130 is deployed between the terminal 110 and the server 120. In some implementations, client software is installed and runs on the terminal 110. The client software is used to access a network application deployed in the second network. The client software is, for example, virtual private network (virtual private network, VPN) software. For example, in an SDP zero-trust scenario, the client software is an SDP client. The client software is, for example, browser software, or an application client corresponding to a network application. The server 120 acts as an access object. The server 120 is configured to provide a network application. In some implementations, the security protection system 130 includes a network device 131 and a controller 132. The network device 131 is located between the first network and the second network. For example, the network device 131 is separately connected to the first network and the second network.

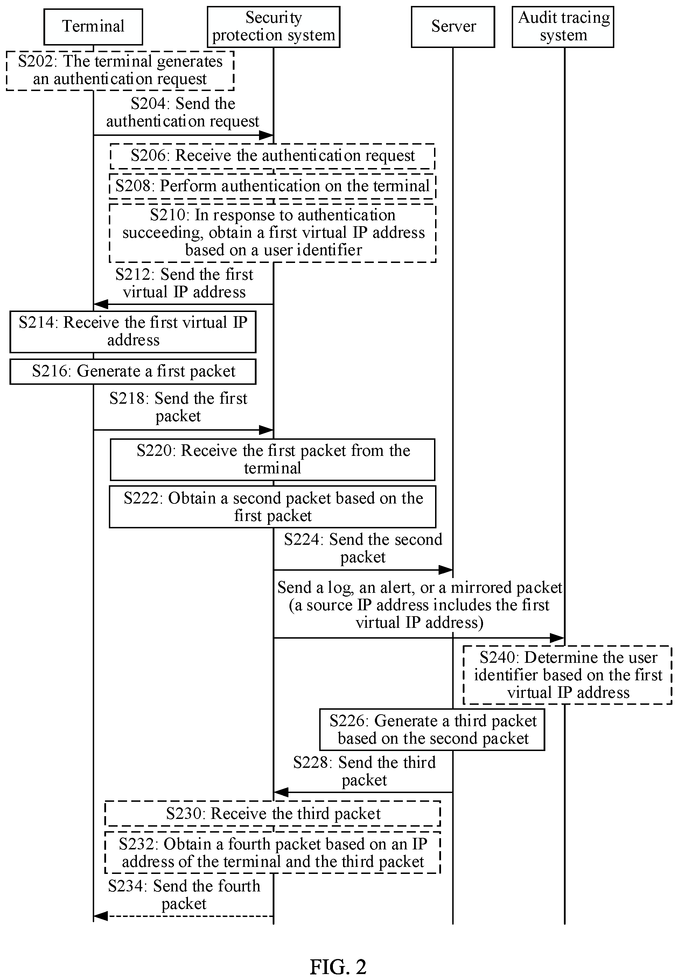

FIG. 2 is a schematic flowchart of a network application access method according to an embodiment of this application. In some implementations, the method shown in FIG. 2 is applied to the network system 10 shown in FIG. 1, and the method shown in FIG. 2 is performed by the terminal 110, the security protection system 130, and the server 120 in the network system 10 shown in FIG. 1 through interaction. Optionally, when the network device 131 and the controller 132 are separably disposed, a packet forwarding process performed by a security protection system in the method shown in FIG. 2 is specifically performed by the network device 131. For example, the network device 131 supports and enables an access proxy mode, and in the access proxy mode, the network device 131 performs S220, S222, S224, S228, S230, S232, and S234 in the method shown in FIG. 2. In the method shown in FIG. 2, identity authentication and authorization processes performed by the security protection system are performed by the controller 132. For example, the controller 132 performs S206, S208, S210, and S212 in the method shown in FIG. 2.

S202: A terminal generates an authentication request.

The authentication request indicates to perform identity authentication on the terminal. For example, in an SDP zero-trust scenario, the authentication request includes at least one of an SPA authentication request and/or an SDP authentication request. For example, the authentication request is a synchronization (Synchronize, SYN) packet or an HTTP request packet in the transmission control protocol (Transmission Control Protocol, TCP). For another example, in an SSL VPN scenario, the authentication request is a RADIUS authentication packet. For another example, the authentication request is an LDAP authentication packet. For another example, the authentication request is an authentication packet in the 802.1X protocol. For another example, the authentication request is an internet key exchange (internet key exchange, IKE) negotiation packet. In some implementations, the terminal generates the authentication request in response to a login operation of a user.

The authentication request includes a user identifier. Some implementations of this application relate to the user identifier carried in the authentication request initiated by the terminal and a user identifier prestored in the security protection system before the terminal initiates authentication. For distinguishing description, the following uses a "first user identifier" to describe the user identifier carried in the authentication request. The first user identifier is an identifier of a user that logs in to the terminal.

The terminal obtains the first user identifier in a plurality of implementations. In some implementations in which the terminal obtains the first user identifier, the terminal displays an authentication interface. The user enters the first user identifier on the authentication interface. The terminal receives the first user identifier entered on the authentication interface. For example, in an SDP zero-trust scenario, the terminal displays the authentication interface through an SDP client, and the terminal receives, through the SDP client, the first user identifier entered on the authentication interface. In some other implementations in which the terminal obtains the first user identifier, the first user identifier includes a certificate prestored in the terminal. For example, the first user identifier includes the certificate configured for the SDP client when the SDP client is installed, and the terminal reads the first user identifier from local storage space of the terminal. In still some implementations in which the terminal obtains the first user identifier, the first user identifier includes a device identifier of the terminal, and the terminal reads the device identifier configured or burnt on hardware of the terminal.

In some implementations, the terminal encapsulates a first device identifier of the terminal into the authentication request and sends the authentication request to the security protection system. The security protection system obtains the first device identifier of the terminal carried in the authentication request, and performs authentication on the terminal based on the first device identifier of the terminal and the second device identifier of the terminal prestored in the security protection system.

S204: The terminal sends the authentication request to the security protection system.

A destination of the authentication request may include a plurality of cases. In some implementations, the security protection system includes a controller, and the terminal sends the authentication request to the controller. For example, in the SDP zero-trust scenario, the terminal includes the SDP client, the security protection system includes an SDP controller, and the terminal sends the authentication request to the SDP controller through the SDP client. For another example, in an SSL VPN scenario, the terminal sends the authentication request to an SSL VPN server through a web browser.

For more details about generating and sending the authentication request by the terminal, refer to the foregoing descriptions of SPA authentication and SDP authentication.

S206: The security protection system receives the authentication request from the terminal.

S208: The security protection system performs authentication on the terminal based on the authentication request.

In some implementations, a manner in which the security protection system performs authentication on the terminal includes at least one of SPA authentication or SDP authentication.

In some implementations, the security protection system obtains the first user identifier carried in the authentication request. The security protection system performs a consistency check based on the first user identifier and a second user identifier prestored in the security protection system. If the consistency check on the first user identifier succeeds, the security protection system determines that the terminal passes the authentication. If the consistency check on the first user identifier fails, the security protection system determines that the terminal fails the authentication.

In this embodiment, after the terminal initiates authentication, the security protection system delivers a virtual IP address corresponding to the user identifier to the terminal only when the terminal passes the authentication, thereby improving security of an intranet IP address.

S210: In response to the terminal passing the authentication, the security protection system obtains a first virtual IP address based on the user identifier.

In some implementations of this application, a packet interaction process involves virtual IP addresses of different subjects. For distinguishing description, the "first virtual IP address" is specifically a virtual IP address that corresponds to a user identifier and that is located in a network in which a server is located.

In some implementations of obtaining the first virtual IP address, the security protection system searches a target correspondence based on the user identifier, to obtain the first virtual IP address.

The target correspondence is, for example, the correspondence between the user identifier and the virtual IP address described above. The target correspondence includes the user identifier and the first virtual IP address. Optionally, the target correspondence uses a key-value format (key-value), the user identifier is a key (key) in the target correspondence, and the first virtual IP address is a value (value) corresponding to the key in the target correspondence. In some implementations, one user identifier corresponds to one virtual IP address in the target correspondence. Therefore, virtual IP addresses found by the security protection system based on different user identifiers are not duplicate, so that an audit tracing system can locate a unique user identifier based on one virtual IP address, thereby improving tracing accuracy and facilitating auditing. In some implementations, one user identifier corresponds to one or more virtual IP addresses in the target correspondence, so as to meet a requirement of accessing a dual-stack service or a requirement of accessing a plurality of network applications in a plurality of intranets.

For a manner in which the security protection system obtains the target correspondence, optionally, the security protection system prestores the target correspondence before the terminal initiates authentication. For example, an administrator configures the target correspondence for the security protection system. For example, in the SDP zero-trust scenario, the security protection system includes the SDP controller. In an SDP registration (initial permission configuration) process, the administrator configures the target correspondence for the SDP controller.

For more technical details of the target correspondence, refer to the foregoing descriptions of the correspondence between the user identifier and the virtual IP address.

In an example of obtaining the first virtual IP address, the user identifier carried in the authentication request is User 1, and the security protection system searches, based on User 1, the target correspondence shown in Table 3, to learn that a virtual IP address corresponding to User 1 is 192.168.20.11, where 192.168.20.11 is a specific example of the first virtual IP address. In another example of obtaining the first virtual IP address, the user identifier carried in the authentication request is User 2, and the security protection system searches, based on User 2, the target correspondence shown in Table 3, to learn that a virtual IP address corresponding to User 2 is 1540b:843c:1:a::100, where 1540b:843c:1:a::100 is a specific example of the first virtual IP address.

In some other implementations of obtaining the first virtual IP address, the security protection system interacts with a third-party authentication system to obtain the first virtual IP address. For example, the security protection system sends the user identifier to the third-party authentication system. The third-party authentication system searches the target correspondence based on the user identifier, to obtain the first virtual IP address. The third-party authentication system sends the first virtual IP address to the security protection system. The security protection system receives the first virtual IP address from the third-party authentication system. In an implementation in which the security protection system interacts with the third-party authentication system, the security protection system sends a query request to the third-party authentication system, where the query request includes the user identifier and an operator, and the operator indicates to query the virtual IP address corresponding to the user identifier. The third-party authentication system parses the query request to obtain the user identifier and the operator. The third-party authentication system performs, based on the user identifier, the query operation indicated by the operator, to obtain the virtual IP address corresponding to the user identifier.

S212: The security protection system sends the first virtual IP address to the terminal during an authorization process of the terminal.

In some implementations, the security protection system generates an authentication response based on the first virtual IP address. The security protection system sends the authentication response to the terminal. The authentication response is a response packet corresponding to the authentication request. The authentication response includes the first virtual IP address. Because the authentication response carries the first virtual IP address, it is equivalent to that the security protection system delivers the virtual IP address while feeding back a result of identity authentication to the terminal. In some implementations, the authentication response further includes a character string indicating that the terminal passes the identity authentication.

In some implementations in which the security protection system delivers the first virtual IP address, when an identity authentication manner used by the security protection system for the terminal includes SDP authentication, the authentication response carrying the first virtual IP address includes a response packet in an interaction process of SDP authentication. For example, the authentication request initiated by the terminal includes an SDP authentication request, and the security protection system generates an SDP authentication response corresponding to the SDP authentication request. The security protection system sends the SDP authentication response corresponding to the SDP authentication request to the terminal, where the SDP authentication response includes the first virtual IP address.

In some implementations in which the security protection system delivers the first virtual IP address, the authentication request sent by the terminal includes an HTTP request packet, the security protection system generates an HTTP response packet corresponding to the HTTP request packet, and the security protection system sends the HTTP response packet corresponding to the HTTP request packet to the terminal. A response body in the HTTP response packet carries the first virtual IP address. Optionally, the HTTP response packet further includes a character string indicating that the terminal passes the identity authentication. For example, the response body is in a format of extensible markup language (extensible markup language, XML), JavaScript object notation (javascript object notation, JSON), or protocol buffers (protobuf).

In an example, the security protection system performs identity authentication on the terminal in the SDP authentication manner. The authentication request initiated by the terminal includes the SDP authentication request, and the SDP authentication request includes the HTTP request packet. The security protection system sends the SDP authentication response corresponding to the SDP authentication request to the terminal, and the SDP authentication response is the HTTP response packet. A response body in the SDP authentication response carries the first virtual IP address.

In a specific example in which the security protection system delivers the first virtual IP address, the security protection system sends the HTTP response packet to the terminal. Content of the HTTP response packet is shown as follows:

```
          HTTP/1.1 200 OK
          Content-Type: application/json
          {
            "status code": "0000",
            "message": "success",
            "Token":
 "yJhbGciOiJ1UzUxMiJ9.eyJpc3MiOiJCQyIsInN1Yi16ImppYW5namlhbilsIm1hdCI6MTY0OTM
 xMjAxMSwiZXhwljoxNjc1MjMyMDExLCJ0eXBIljoidXNIcilsIklEIjoiNTNiZTM1",
            "vIP": "192.168.20.11"
          }
```

HTTP/1.1 200 OK indicates that the security protection system serving as the server has successfully processed the authentication request from the terminal and returned the authentication response. Content-Type: application/json indicates that a data type of a packet body in the authentication response is in a format of JSON. "status code": "0000" indicates a customized status code, indicating that the terminal passes the SDP authentication. "message": "success" indicates that the security protection system successfully finds the virtual IP address corresponding to the user identifier. "token" is generated by the security protection system and is used for subsequent identity authentication and session management. "vIP": "vIP": "192.168.20.11" indicates that the first virtual IP address is 192.168.20.11.

In some implementations in which the security protection system delivers the first virtual IP address, the authentication request sent by the terminal includes an HTTPS request packet, the security protection system generates an HTTPS response packet corresponding to the HTTPS request packet, and the security protection system sends the HTTPS response packet corresponding to the HTTPS request packet to the terminal. A response body in the HTTPS response packet carries the first virtual IP address. Optionally, the HTTPS response packet further includes a character string indicating that the terminal passes the identity authentication.

In some implementations in which the security protection system delivers the first virtual IP address, the authentication request sent by the terminal includes a TCP-SYN packet, and the security protection system generates a synchronization-acknowledgment (synchronize-acknowledge, SYN-ACK) packet corresponding to the TCP-SYN packet, where the SYN-ACK packet includes the first virtual IP address. For example, a TCP option of the SYN-ACK packet carries the first virtual IP address. The security protection system sends the SYN-ACK packet including the first virtual IP address to the terminal.

In some other implementations in which the security protection system delivers the first virtual IP address, when an identity authentication manner used by the security protection system for the terminal includes SPA authentication, the authentication response carrying the first virtual IP address includes a response packet in an interaction process of SPA authentication. For example, the authentication request initiated by the terminal includes an SPA authentication request, the security protection system generates an SPA authentication response packet corresponding to the SPA authentication request, and the security protection system sends the SPA authentication response packet corresponding to the SPA authentication request to the terminal, where the SPA authentication response packet includes the first virtual IP address.

In still some implementations in which the security protection system delivers the first virtual IP address, the authentication request sent by the terminal includes a RADIUS authentication packet, and the security protection system sends a RADIUS response packet corresponding to the RADIUS authentication packet to the terminal, where the RADIUS response packet carries the first virtual IP address.

In still some implementations in which the security protection system delivers the first virtual IP address, the authentication request sent by the terminal includes an LDAP authentication request packet. The authentication response sent by the security protection system to the terminal includes an LDAP authentication response packet, where the LDAP authentication response packet carries the first virtual IP address.

In still some implementations in which the security protection system delivers the first virtual IP address, the authentication request sent by the terminal includes an IKE negotiation packet. The authentication response sent by the security protection system to the terminal includes an IKE negotiation response packet, where the IKE negotiation response packet carries the first virtual IP address.

The foregoing enumerated protocol types of the packets used by the security protection system to deliver the first virtual IP address is merely an example, and the protocol type of the packet used to deliver the first virtual IP address is, for example, any protocol type that matches the protocol type of the authentication request initiated by the terminal.

In some implementations, during an authorization process of the terminal, the security protection system sends, to the terminal, the first virtual IP address and a resource list that the security protection system authorizes the user to access. For a definition and an explanation of the resource list, refer to the descriptions of the resource list in the foregoing SDP authorization process. The first virtual IP address and the resource list are delivered to the terminal together, which is equivalent to that two types of resources are delivered to the terminal at the same time through one authorization process: a virtual IP address of an access subject (the terminal), and an identifier of an access object (the network application and the SDP gateway).

In some implementations of delivering the first virtual IP address and the resource list together to the terminal, the security protection system encapsulates the first virtual IP address and the resource list into a same packet, to obtain the packet including the first virtual IP address and the resource list. The security protection system sends the packet including the first virtual IP address and the resource list to the terminal, so that the terminal can obtain both the first virtual IP address and the resource list from the received packet.

In some implementations of delivering the first virtual IP address and the resource list together to the terminal, the security protection system encapsulates the first virtual IP address, an identifier of a network application that the security protection system authorizes the user to access, and an identifier of a server providing the network application into a same packet, to obtain the packet including the first virtual IP address, the identifier of the network application, and the identifier of the server providing the network application. The security protection system sends the packet including the first virtual IP address, the identifier of the network application, and the identifier of the server to the terminal.

In some implementations of delivering the first virtual IP address and the resource list together to the terminal, the security protection system encapsulates the first virtual IP address, an identifier of a network application that the security protection system authorizes the user to access, an identifier of a server providing the network application, an IP address of a network device (such as the SDP gateway) that can access the network application, and a port number of the network device (such as the SDP gateway) that can access the network application into a same packet, to obtain the packet including the first virtual IP address, the identifier of the network application, the identifier of the server, the IP address of the network device, and the port number of the network device. The security protection system sends the packet including the first virtual IP address, the identifier of the network application, the identifier of the server, the IP address of the network device, and the port number of the network device to the terminal.

For a packet type including the first virtual IP address, the identifier of the network application, the identifier of the server, the IP address of the network device, and the port number of the network device, refer to the foregoing examples of various types of packets carrying the first virtual IP address. For example, the packet including the first virtual IP address, the identifier of the network application, the identifier of the server, the IP address of the network device, and the port number of the network device is an SDP authentication response or an SPA authentication response packet, for example, an HTTP response packet, an HTTPS response packet, an SYN-ACK packet, or a RADIUS response packet.

In a specific example of content of the packet delivered by the security protection system to the terminal in the authorization process, the security protection system sends an HTTP response packet to the terminal, where the HTTP response packet includes the first virtual IP address and the resource list, and content of the HTTP response packet is shown as follows:

```
          HTTP/1.1 200 OK
          Content-Type: application/json
          {
            "status code": "0000",
            "message": "success",
            "Token":
 "yJhbGciOiJ1UzUxMiJ9.eyJpc3MiOiJCQyIsInN1Yil6ImppYW5namlhbilsImlhdCI6MTY0OTM
 xMjAxMSwiZXhwljoxNjc1MjMyMDExLCJ0eXBIljoidXNIcilsIklEIjoiNTNiZTM1",
             "vIP": "192.168.20.11"
            "resources": [
              {
                "name": "Patent management system",
                "url": "https://www.mypatent.com/index.html",
                "sdp_gateway_ip": "10.19.10.100",
                "sdp_gateway_port": 8443
              },
              {
                "name": "Online game",
                "url": "http://192.168.0.1/index.html",
                "sdp_gateway_ip": "10.19.20.200",
                "sdp_gateway_port": 5060
              }
            ]
          }
```

By parsing the content of the HTTP response packet, the terminal can determine that when a network application whose name is the patent management system needs to be accessed, the terminal needs to encapsulate a virtual IP address 192.168.20.1 into an access request, and sends the access request including the virtual IP address 192.168.20.11 to a port whose port number is 8443 of an SDP gateway whose IP address is 10.19.10.100, to access the patent management system whose domain name is www.mypatent.com through the SDP gateway whose IP address is 10.19.10.100. When a network application whose name is the online game needs to be accessed, the terminal needs to encapsulate the virtual IP address 192.168.20.1 into the access request, and send the access request including the virtual IP address 192.168.20.11 to a port whose port number is 5060 of an SDP gateway whose IP address is 10.19.20.200, to access the online game whose IP address is 192.168.0.1 through the SDP gateway whose IP address is 10.19.20.200.

S214: The terminal receives the first virtual IP address from the security protection system in the process of authorizing the terminal.

In some implementations, the terminal receives an authentication response (for example, an SDP authentication response or an SPA authentication response packet) from the security protection system. The terminal parses the authentication response to obtain the first virtual IP address carried in the authentication response. For example, the terminal receives an HTTP response packet. The terminal parses a response body in the HTTP response packet to obtain the first virtual IP address carried in the response body. For example, the terminal receives an HTTPS response packet. The terminal parses a response body in the HTTPS response packet to obtain the first virtual IP address carried in the response body.

S216: The terminal generates a first packet based on the first virtual IP address.

The first packet includes the first virtual IP address. For example, the terminal encapsulates the first virtual IP address into the first packet, so that the security protection system can obtain the first virtual IP address from the first packet, to encapsulate the first virtual IP address into a source IP address field and then send the source IP address field to the server.

A protocol type of the first packet includes a plurality of cases. In some implementations, the first packet is an HTTP packet. For example, the first packet is an HTTP connect request packet. In some other implementations, the first packet is an HTTP obtaining (HTTP get) packet, an HTTP submission (HTTP post) packet, or an HTTP put packet. In some other implementations, the first packet is an HTTPS packet. In some other implementations, the first packet is a TCP-SYN packet. In still some implementations, the first packet is a secure shell (secure shell, SSH) packet, a TELNET packet, or a file transfer protocol (File Transfer Protocol, FTP) packet.

A position of carrying the first virtual IP address in the first packet includes a plurality of implementations. In some implementations, the first packet includes an application layer packet header, and the application layer packet header in the first packet carries the first virtual IP address. For example, the first packet includes an HTTP header. The HTTP header includes the first virtual address. For example, the HTTP header includes an X-Forwarded-For field, and the first virtual IP address is carried in the X-Forwarded-For field in the HTTP header. For another example, the first packet includes an HTTPS header, and the HTTPS header includes the first virtual address. For example, the HTTPS header includes an X-Forwarded-For field. The first virtual IP address is carried in an X-Forwarded-For field in the HTTPS header.

In some implementations, an encrypted tunnel is established between the terminal and the security protection system, and the first packet further includes a tunnel header used to establish the encrypted tunnel. For example, the tunnel header includes an HTTPS header. For example, the tunnel header includes an SSL/TLS tunnel header. Optionally, the first virtual IP address is carried in a packet in an inner layer of a tunnel header in the first packet. For example, the first packet includes an IP basic header encapsulated in the inner layer of the tunnel header, and the first virtual IP address is carried in a source IP address field in the IP basic header in the inner layer of the tunnel header. For another example, the first packet includes a TCP header encapsulated in the inner layer of the tunnel header, and the first virtual IP address is carried in a TCP option in the TCP header in the inner layer of the tunnel header. In some other implementations, the first virtual IP address is carried in a tunnel header. For example, the first virtual IP address is carried in an HTTP header included in the tunnel header. For another example, the first virtual IP address is carried in a TCP option in a TCP header included in the tunnel header.

In some implementations, the first packet is a data packet (also referred to as a service packet). For example, the first packet not only includes the first virtual IP address, but also includes first service data. The first service data is service data to be transmitted by the terminal to the network application. Because the first packet includes the first virtual IP address and the first service data, the security protection system is triggered to forward the first service data to the network application by using the first virtual IP address as a source IP address.

When the first packet is a data packet, the first virtual IP address is, for example, encapsulated in an outer layer of the first service data. For example, the first packet includes a payload field, and the payload field in the first packet is used to carry the first service data. The payload field in the first packet is, for example, encapsulated in an application layer packet header that carries the first virtual IP address, or in an inner layer of an IP basic header.

In some implementations, the first packet is a control packet (also referred to as control signaling). For example, the first packet not only includes the first virtual IP address, but also includes a first instruction. The first instruction instructs the security protection system to establish a connection to the server providing the network application. For example, the first instruction includes character string connect. Because the first packet includes the first virtual IP address and the first instruction, the first instruction triggers the security protection system to establish a connection to the network application by using the first virtual IP address as a source IP address, so that service data from the terminal is subsequently forwarded to the network application by using the connection. For another example, the first packet not only includes the first virtual IP address, but also includes a second instruction. The second instruction instructs the security protection system to establish an encrypted tunnel with the terminal. Because the first packet includes the first virtual IP address and the second instruction, the first virtual IP address can be transferred to the security protection system in a process of establishing the encrypted tunnel between the security protection system and the terminal.

In some implementations, the first packet further includes an identifier of a server providing a to-be-accessed network application. For example, the first packet further includes an IP address of the server providing the network application. For another example, the first packet further includes a domain name of the server providing the network application. For another example, the first packet further includes a URL of the server providing the network application. Optionally, the identifier of the server (for example, the IP address of the server) is carried in an application layer packet header of the first packet. For example, the identifier of the server is carried in an HTTP header, an HTTP request line, or an HTTPS header of the first packet. For example, the identifier of the server (for example, the IP address of the server) and the first virtual IP address are carried in a same application layer packet header of the first packet. Optionally, the IP address of the server is carried in a destination address field in an IP basic header in an inner layer of a tunnel header in the first packet. Alternatively, the IP address of the server is carried in an HTTP header included in the tunnel header in the first packet. Alternatively, the IP address of the server is carried in an HTTP request line included in the tunnel header in the first packet. The identifier of the server (for example, the IP address of the server) is optionally received by the terminal from the security protection system in the authorization process. The terminal encapsulates both the identifier of the server and the first virtual IP address into the first packet, so that the first packet includes the identifier of the server and the first virtual IP address. Because the first packet includes the IP address of the server and the first virtual IP address, the security protection system can forward the packet from the terminal to the server by using the first virtual IP address as a source IP address and using the IP address of the server as a destination IP address.

In some implementations, the first packet further includes an identifier of a network device (for example, an SDP gateway) that can access a network application. For example, the first packet further includes an IP address of the network device (for example, the SDP gateway) that can access the network application and a port number of the network device (for example, the SDP gateway) that can access the network application. Optionally, the identifier of the network device is carried in an application layer packet header of the first packet. For example, the identifier of the network device is carried in a host field in an HTTP header of the first packet. For another example, the IP address of the network device is carried in a destination IP address field in an IP basic header of the first packet, and the port number of the network device is carried in a destination port number field in a transport layer protocol header of the first packet. The IP address and the port number of the network device that can access the network application are optionally received by the terminal from the security protection system in the authorization process. The terminal encapsulates the IP address of the network device that can access the network application, the port number of the network device that can access the network application, and the first virtual IP address into the first packet, so that the first packet includes the IP address of the network device that can access the network application, the port number of the network device that can access the network application, and the first virtual IP address. Therefore, the first packet can be forwarded to the network device that can access the network application based on the IP address of the network device and the port number of the network device.

In an example application scenario of generating the first packet, the terminal displays an icon of the network application. The user triggers a click operation on the icon of the network application. In response to the click operation on the icon of the network application, the terminal searches, based on the icon of the network application, the resource list for the IP address of the server corresponding to the network application, the IP address of the network device that can access the network application, and the port number of the network device that can access the network application. The terminal encapsulates the first virtual IP address, the IP address of the server, the IP address of the network device, and the port number of the network device into the first packet, to obtain the first packet. In a specific example, in response to a click operation on an icon of the online game, the terminal finds, from the resource list based on the icon of the online game, that an IP address of a server corresponding to the online game is 192.168.0.1, an IP address of a network device that can access the network application is 10.19.20.200, and a port number of the network device that can access the network application is 5060. The terminal encapsulates the first virtual IP address 192.168.20.11, the IP address 192.168.0.1 of the server, the IP address 10.19.20.200 of the network device, and the port number 5060 of the network device into the first packet, to obtain the first packet.

S218: The terminal sends the first packet to the security protection system.

For example, the terminal adds the first virtual IP address to an XFF field in an HTTP header of the first packet. When another field other than the XFF field in the HTTP header or another packet header in the first packet is used to carry the first virtual IP address, the terminal may add the first virtual IP address to the another field other than the XFF field in the HTTP header or the another packet header.

S220: The security protection system receives the first packet from the terminal.

In some implementations, the security protection system includes a network device (for example, the SDP gateway). After the security protection system determines that the terminal passes the authentication, the security protection system enables a port (for example, the port number of the network device that can access the network application in the resource list) that is on the network device and that the terminal has permission to access, and the network device receives the first packet through the port.

S222: The security protection system obtains a second packet based on the first packet.

The second packet is a packet that is sent by the security protection system to the server when the security protection system interacts with the server as triggered by the first packet. A source IP address in the second packet includes the first virtual IP address. For example, the second packet includes an IP basic header. A source IP address field in the IP basic header of the second packet carries the first virtual IP address. Because the source address in the second packet carries the first virtual IP address, a user accessing the server can be determined based on the first virtual IP address, thereby implementing tracing. In some implementations, the first virtual IP address carried in the source IP address field in the second packet is obtained by the security protection system by parsing content of a specific field of the first packet. For example, the security protection system parses the application layer packet header in the first packet, to obtain the first virtual IP address carried in the application layer packet header in the first packet.

In some other implementations, the second packet is a control packet. For example, the second packet includes a third instruction, and the third instruction instructs the server to establish a connection to the security protection system. For example, the second packet is a TCP-SYN packet.

The security protection system obtains the second packet through processing in a plurality of implementations. The following uses several implementations as examples to describe the manner of obtaining the second packet.

Implementation 1 of obtaining the second packet: The security protection system replaces a source IP address originally carried in the first packet with the first virtual IP address.

In some implementations, the first packet includes an IP basic header, and the security protection system replaces content of a source IP address field in the IP basic header in the first packet with the first virtual IP address, to obtain the second packet. For example, the source IP address field in the IP basic header in the first packet received by the security protection system carries a real IP address of the terminal, and the security protection system replaces the real IP address of the terminal in the source IP address field in the IP basic header in the first packet with the first virtual IP address, so that the content of the source IP address field in the IP basic header in the first packet is updated from the real IP address of the terminal to the first virtual IP address. Therefore, when the first packet passes through the security protection system when being forwarded, a source IP address in the first packet can be changed from an IP address in the first network to an IP address in the second network.

In some implementations, the security protection system further replaces content of a destination IP address field in the IP basic header in the first packet with the IP address of the server providing the network application, to obtain the second packet. For example, the destination IP address field in the IP basic header in the first packet received by the security protection system carries an IP address of the security protection system, and the security protection system replaces the IP address of the security protection system carried in the destination IP address field with the IP address of the server, so that the content of the destination IP address field in the IP basic header in the first packet is updated from the IP address of the security protection system to the IP address of the server. Therefore, when the first packet passes through the security protection system when being forwarded, a destination IP address in the first packet can be changed from an IP address in the first network to an IP address in the second network.

A time sequence of replacing the source IP address and the destination IP address when the security protection system forwards the first packet is not limited in this embodiment. For example, the security protection system first replaces the source IP address in the first packet with the first virtual IP address, and then replaces the destination IP address in the first packet with the IP address of the server; or the security protection system first replaces the destination IP address in the first packet with the IP address of the server, and then replaces the source IP address in the first packet with the first virtual IP address.

In some implementations, the second packet is a data packet. The second packet includes the first service data to be transmitted by the terminal to the network application. The first service data carried in the second packet is, for example, from the payload field of the first packet. For example, when the first packet is a data packet, in a process of forwarding the first packet, the security protection system does not need to change or parse content of the payload field in the first packet, but replaces the source IP address and the destination IP address in the outer layer of the payload field. Therefore, the obtained second packet also includes the first service data.

**In** some implementations, the first packet further includes the tunnel header used to establish the encrypted tunnel between the terminal and the security protection system. The security protection system decapsulates the tunnel header carried in the first packet, and replaces, with the first virtual IP address, the source IP address in the IP basic header encapsulated in the inner layer of the tunnel header, to obtain the second packet. Alternatively, the security protection system decapsulates a part other than the IP basic header in the tunnel header of the first packet, and replaces the source IP address in the IP basic header included in the tunnel header with the first virtual IP address, to obtain the second packet.

Implementation 2 of obtaining the second packet: The security protection system decapsulates the IP basic header in the first packet, and re-encapsulates the IP basic header whose source IP address is the first virtual IP address.

**In** some implementations, the first packet includes a first IP basic header, the security protection system decapsulates the first IP basic header in the first packet, and the security protection system generates a second IP basic header based on the first virtual IP address, where a source IP address field in the second IP basic header includes the first virtual IP address. The security protection system encapsulates the newly generated second IP basic header into the first packet, to obtain the second packet.

Implementation 3 of obtaining the second packet: The security protection system stores the first virtual IP address, and when a packet from the terminal is subsequently received, the security protection system replaces a source IP address in the subsequently received packet with the stored first virtual IP address.

For example, the security protection system stores the first virtual IP address and a parameter of a first session in a session relationship. The session relationship includes a correspondence between the first virtual IP address and the parameter of the first session. A form of the session relationship is, for example, one entry or a combination of a plurality of entries in a session table stored in the security protection system.

The first session is a session established between the terminal and the security protection system. The first packet belongs to the first session. For example, the first packet is the 1^{st} packet in the first session.

The parameter of the first session identifies the first session. The parameter of the first session is, for example, obtained by the security protection system from the first packet. In some implementations, the parameter of the first session includes an IP address of the terminal and the IP address of the security protection system (the IP address of the network device that can access the network application). In some implementations, the parameter of the first session includes a quintuple of the first session. The quintuple of the first session includes the IP address of the terminal, the IP address of the network device that can access the network application, a port number of the terminal, the port number of the network device that can access the network application, and a first protocol identifier, where the first protocol identifier identifies a transport layer protocol based on which communication between the terminal and the network device is performed. In some other implementations, the parameter of the first session includes information carried in an application layer packet of the first packet. For example, the parameter of the first session includes a session identifier (session ID) of the first session. Because the parameter of the first session is stored in the session relationship, the security protection system can determine, based on matching between a subsequently received packet and the parameter of the first session, whether the subsequently received packet is a subsequent packet in the first session.

In some implementations, the security protection system further stores a parameter of a second session in the session relationship. The second session is a session established between the network device that can access the network application and the server. In some implementations, the parameter of the second session includes the first virtual IP address and the IP address of the server providing the network application. In some implementations, the parameter of the second session includes a quintuple of the second session. The quintuple of the second session includes the first virtual IP address, the IP address of the server providing the network application, the IP address of the network device that can access the network application, the port number of the network device that can access the network application, and a second protocol identifier, where the second protocol identifier identifies a transport layer protocol based on which communication between the network device that can access the network application and the server is performed. In some other implementations, the parameter of the second session includes information carried in an application layer packet of the first packet. For example, the parameter of the second session includes a session ID of the second session. Because the parameter of the second session is stored in the session relationship, the security protection system can determine, based on matching between a subsequently received packet and the parameter of the second session, whether the subsequently received packet is a subsequent packet in the second session.

Optionally, the session relationship uses a key-value (key-value) format. When a subsequent outbound packet from the terminal is forwarded, the parameter of the first session is a key in the session relationship, and the parameter of the second session is a value corresponding to the key in the session relationship. When a subsequent inbound packet from the server is forwarded, the parameter of the second session is a key in the session relationship, and the parameter of the first session is a value corresponding to the key in the session relationship.

**In** an example of obtaining the second packet, after the security protection system stores the first virtual IP address and the parameter of the first session in the session relationship based on the first packet, the security protection system subsequently receives a first data packet. In response to determining that the parameter of the first session exists in the subsequently received first data packet, the security protection system determines that the first data packet is a packet in the first session. In this case, the security protection system replaces a source IP address in the first data packet with the first virtual IP address, to obtain the second packet. For example, the security protection system matches the source IP address in the first data packet with the IP address of the terminal in the first session in the session relationship, and matches a destination IP address in the first data packet with the IP address of the security protection system in the first session in the session relationship. In response to the source IP address in the first data packet matching the IP address of the terminal in the first session in the session relationship and the destination IP address in the first data packet matching the IP address of the security protection system in the first session in the session, the security protection system obtains the first virtual IP address from the session relationship, and replaces the source IP address in the first data packet with the first virtual IP address, to obtain the second packet.

Implementation 4 of obtaining the second packet: The security protection system obtains, from the first packet, the IP address of the server providing the network application. The security protection system generates the second packet by using the first virtual IP address as a source IP address and using the IP address of the server as a destination IP address, where the second packet is a TCP-SYN packet, and the TCP-SYN packet is used to request the server to establish a TCP connection between the server and the security protection system.

S224: The security protection system sends the second packet to the server.

The source IP address field in the IP basic header in the second packet carries the first virtual IP address, and the first virtual IP address is the IP address (an intranet IP address or a trusted IP address) in the network (the second network) in which the server is located. Therefore, when the second packet is transmitted between the security protection system and the server, and an intermediate node between the security protection system and the server forwards the second packet, the intermediate node can determine that the second packet is from a trusted device, thereby improving a success rate of forwarding the second packet between the security protection system and the server.

S226: The server generates a third packet based on the second packet.

The third packet is an inbound packet corresponding to the second packet. In some implementations, when the second packet is a data packet, the server parses the payload field of the second packet, to obtain the first service data carried in the payload field. The server performs, based on the first service data, a service corresponding to the network application, to obtain second service data. The server generates the third packet based on the first virtual IP address and the second service data. The third packet includes the second service data. A destination IP address in the third packet includes the first virtual IP address.

For example, the third packet includes an IP basic header, an application layer packet header, and a payload field. A source IP address field in the IP basic header in the third packet carries the IP address of the server (the IP address in the second network). A destination IP address field in the IP basic header of the third packet carries the first virtual IP address. The payload field in the third packet includes the second service data. The payload field is encapsulated in the IP basic header and an inner layer of the application layer packet header.

**In** a specific example of a packet encapsulation format in a packet interaction process between the terminal, the security protection system, and the server, the first packet sent by the terminal includes an IP basic header whose source IP address is the real IP address of the terminal, an HTTPS header including the first virtual IP address, and an HTTP request packet encapsulated in an inner layer of the HTTPS header. The second packet sent by the security protection system includes an IP basic header whose source IP address is the first virtual IP address and an HTTP request packet encapsulated in an inner layer of the IP basic header. The third packet sent by the server includes an IP basic header whose destination IP address is the first virtual IP address and an HTTP response packet encapsulated in an inner layer of the IP basic header. The HTTP response packet includes an HTTP header and a payload field, and the payload field includes the second service data. The payload field is encapsulated in the IP basic header and an inner layer of the HTTP header.

In some implementations, when the second packet is a control packet, the server performs a corresponding operation based on an instruction carried in the control packet. For example, the second packet is a TCP-SYN packet, and the server establishes a TCP connection to the security protection system based on the TCP-SYN packet.

S228: The server sends the third packet to the security protection system.

S230: The security protection system receives the third packet from the server.

S232: The security protection system obtains a fourth packet based on the IP address of the terminal and the third packet.

The fourth packet is a packet that is sent by the security protection system to the terminal when the security protection system interacts with the terminal as triggered by the third packet. A source IP address in the fourth packet includes the IP address of the security protection system, and a destination IP address in the fourth packet includes the IP address of the terminal. The fourth packet includes the second service data. For example, the fourth packet includes an IP basic header and a payload field, and a destination IP address field in the IP basic header in the fourth packet carries the IP address of the terminal. A source IP address field in the IP basic header in the fourth packet carries the IP address of the security protection system (the IP address of the network device that can access the network application). The payload field in the fourth packet includes the second service data.

The security protection system obtains the fourth packet through processing in a plurality of implementations. The following uses several implementations as examples to describe the manner of obtaining the fourth packet.

Implementation 1 of obtaining the fourth packet: The security protection system replaces a destination IP address originally carried in the third packet with the IP address of the terminal.

In some implementations, the third packet includes an IP basic header, and the security protection system replaces content of a destination IP address field in the IP basic header in the third packet with the IP address of the terminal, to obtain the fourth packet. For example, the destination IP address field in the IP basic header in the third packet received by the security protection system carries the first virtual IP address, and the security protection system replaces the first virtual IP address with the IP address of the terminal, so that the content of the destination IP address field in the IP basic header in the third packet is updated from the first virtual IP address to the IP address of the terminal. Considering that the first virtual IP address possibly cannot be directly applied to forwarding of an inbound packet (the third packet), the security protection system changes the destination IP address from the first virtual IP address to the IP address of the terminal, so that the packet can be routed and forwarded to the terminal based on the IP address of the terminal.

In some implementations, the security protection system further replaces content of a source IP address field in the IP basic header in the third packet with the IP address of the security protection system, to obtain the fourth packet. For example, the source IP address field in the IP basic header in the third packet received by the security protection system carries the IP address of the server providing the network application, and the security protection system replaces the IP address of the server providing the network application carried in the source IP address field with the IP address of the security protection system, so that the content of the source IP address field in the IP basic header in the third packet is updated from the IP address of the server to the IP address of the security protection system. The security protection system performs the action of replacing the source IP address when forwarding the third packet, so that a source IP address of the third packet can be changed from an IP address in the second network to an IP address in the first network after the third packet passes through the security protection system. Therefore, when a packet is subsequently forwarded in the first network, the IP address in the second network (an intranet IP address) is hidden.

A time sequence of replacing the destination IP address and the destination IP address when the security protection system forwards the third packet is not limited in this embodiment. For example, the security protection system first replaces the destination IP address in the third packet with the IP address of the terminal, and then replaces the source IP address in the third packet with the IP address of the security protection system; or the security protection system first replaces the source IP address in the third packet with the IP address of the security protection system, and then replaces the destination IP address in the third packet with the IP address of the terminal.

In some implementations, the fourth packet is a data packet. The fourth packet includes the first service data to be transmitted by the terminal to the network application. The first service data carried in the fourth packet is, for example, from the payload field of the third packet. For example, when the third packet is a data packet, in a process of forwarding the third packet, the security protection system does not need to change or parse content of the payload field in the third packet, but replaces the destination IP address and the destination IP address in the outer layer of the payload field. Therefore, the obtained fourth packet also includes the first service data.

In some implementations, the fourth packet further includes the tunnel header used to establish the encrypted tunnel between the terminal and the security protection system. For example, the security protection system encapsulates the tunnel header into the third packet, to obtain the fourth packet. Optionally, the security protection system first replaces the source IP address and the destination IP address of the third packet, and then encapsulates the tunnel header into the third packet with both the source IP address and the destination IP address updated.

For a manner in which the security protection system obtains the IP address of the terminal when replacing the destination IP address in the third packet, in some implementations, the security protection system parses the destination IP address field in the IP basic header in the third packet to obtain the first virtual IP address carried in the destination IP address field. The security protection system searches the session relationship based on the first virtual IP address, to obtain the IP address of the terminal corresponding to the first virtual IP address. In some implementations, the security protection system matches the source IP address of the third packet and the destination IP address of the third packet with the parameter of the second session in the session relationship. In response to the source IP address of the third packet matching the destination IP address (the IP address of the server) of the second session in the session relationship and the destination IP address of the third packet matching the source IP address (the first virtual IP address) of the second session in the session relationship, the security protection system determines that the third packet is an inbound packet of the second session. Therefore, the security protection system obtains the IP address of the terminal corresponding to the first virtual IP address in the session relationship, to replace the destination IP address of the third packet based on the IP address of the terminal.

Implementation 2 of obtaining the fourth packet: The security protection system decapsulates the IP basic header in the third packet, and re-encapsulates the IP basic header whose destination IP address is the IP address of the terminal.

In some implementations, the security protection system decapsulates the IP basic header originally included in the third packet, and the security protection system generates the IP basic header based on the IP address of the terminal. A source IP address field in the IP basic header is the IP address of the security protection system, and a destination IP address field in the IP basic header is the IP address of the terminal. The security protection system encapsulates the newly generated IP basic header into the third packet from which the original IP basic header is removed, to obtain the fourth packet.

S234: The security protection system sends the fourth packet to the terminal.

According to the method provided in this embodiment, the user identifier is associated with the virtual IP address. In a process in which the terminal accesses the network application through the security protection system, the source IP address in the packet sent by the security protection system to the server providing the network application is the virtual IP address corresponding to the user identifier, so that the source IP address sent to the server is strongly bound to the user, thereby reducing difficulty of tracing, based on the source IP address in the packet, the user that initiates access. In addition, because the virtual IP address corresponding to the user identifier is the IP address (for example, the intranet IP address) in the network in which the server is located, a corresponding inbound route does not need to be configured on the server for a real IP address of each terminal in the internet, thereby reducing complexity of configuring the inbound route.

S240: The audit tracing system determines the user identifier based on the first virtual IP address, to perform tracing.

The audit tracing system searches the correspondence between the user identifier and the virtual IP address based on the first virtual IP address, to obtain the user identifier corresponding to the first virtual IP address, so as to locate a specific user based on the user identifier. Therefore, the specific user that initiates access to the network application can be determined, implementing auditing and tracing.

In an example of tracing, the audit tracing system searches Table 3 based on the virtual IP address 192.168.20.11, to obtain the user identifier User 1, so as to determine that the user identifier User 1 initiates access to the network application. In another example, the audit tracing system searches Table 3 based on the virtual IP address 540b:843c:1:a::101, to obtain the user identifier User 3, so as to determine that the user identifier User 3 initiates access to the network application.

Optionally, the audit tracing system obtains the first virtual IP address in a plurality of alternative implementations, to implement tracing. For example, in some embodiments, the security protection system sends a part of packets that pass through the security protection system to the audit tracing system according to a predetermined sampling rate or a configured forwarding condition. For example, the security protection system communicates with the audit tracing system through an out-of-band management interface, and the security protection system sends the part of packets that pass through the security protection system to the audit tracing system through the out-of-band management interface. For example, the security protection system replicates a part of packets that pass through the security protection system to obtain a mirrored packet, and the security protection system sends the mirrored packet to the audit tracing system, so that the audit tracing system obtains the first virtual IP address carried in a source IP address field in the mirrored packet, and performs tracing based on the first virtual IP address. In some other embodiments, the audit tracing system is deployed in the second network. The audit tracing system captures a service packet, and obtains the first virtual IP address from a source IP address field in the captured service packet, to perform tracing based on the first virtual IP address.

In some other embodiments, a probe (also referred to as a traffic collection device) generates a log based on a service packet or a mirrored packet of the service packet, and the probe sends the log to the audit tracing system. The log includes a quintuple of the service packet (for example, the second packet in the embodiment in FIG. 2) transmitted in the second network, the quintuple includes a source IP address, a source port number, a destination IP address, a destination port number, and a transport layer protocol number, and the source IP address is the first virtual IP address. The audit tracing system obtains the first virtual IP address from the log, to perform tracing based on the first virtual IP address.

For a deployment position of the probe, in some implementations, the probe is deployed in the second network. For example, the probe is connected to the ingress switch in the second network shown in FIG. 1, or the probe is connected to the switch in a bypass mode. In a process in which the switch forwards the service packet to the server 120 at the back end of the switch, the switch replicates a part or all of service packets that pass through the switch, to obtain a mirrored packet, and the switch sends the mirrored packet to the probe. In some other implementations, the probe is integrated into the ingress switch in the second network shown in FIG. 1. In some other implementations, the probe is connected to the network device 131 in the security protection system shown in FIG. 1, or the probe is integrated into the network device 131 in the security protection system.

In some other implementations, the network device 131 in the security protection system is, for example, an IPS device. The network device 131 in the security protection system generates an alert in a packet forwarding process, and sends the alert to the audit tracing system. The alert includes a quintuple and alert information of a service packet (for example, the second packet in the embodiment in FIG. 2) transmitted in the second network, and a source IP address in the quintuple is the first virtual IP address. The audit tracing system obtains the first virtual IP address from the alert, to perform tracing based on the first virtual IP address.

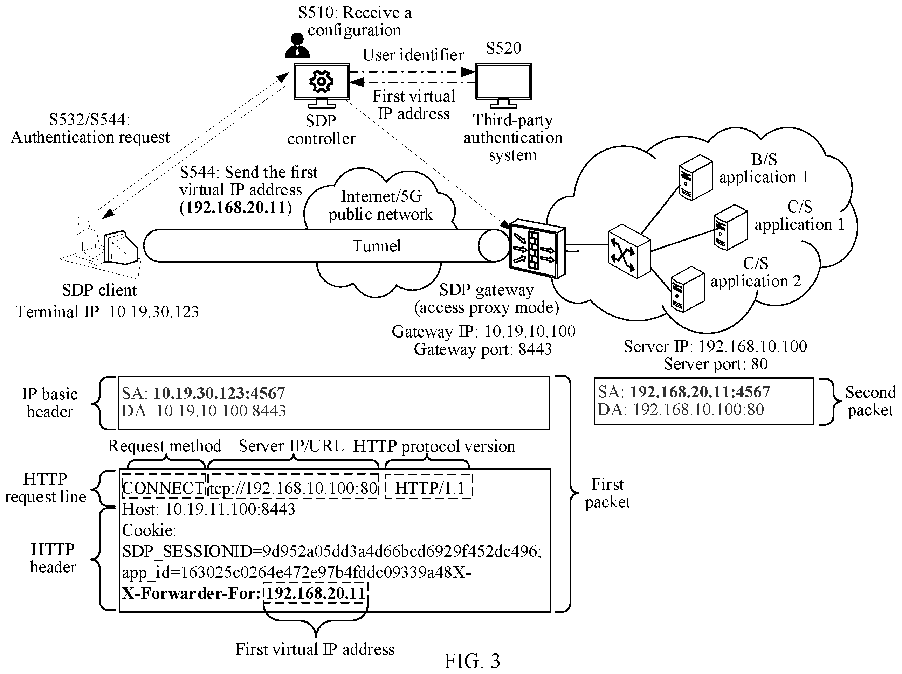

FIG. 3 is a diagram of accessing a network application in an SDP zero-trust scenario according to an embodiment of this application. The security protection system 130 shown in FIG. 1 includes the SDP gateway and the SDP controller in FIG. 3. The terminal 110 shown in FIG. 1 includes the SDP client shown in FIG. 3. The server 120 shown in FIG. 1 is configured to provide a B/S application 1, a C/S application 1, or a C/S application 2 in FIG. 3. FIG. 3 shows a specific example of applying the method shown in FIG. 2 to the SDP zero-trust scenario.

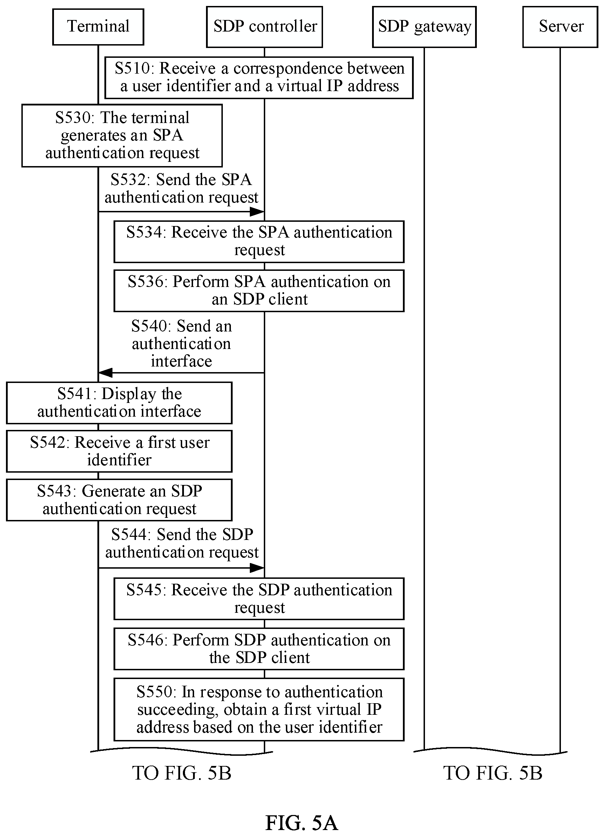

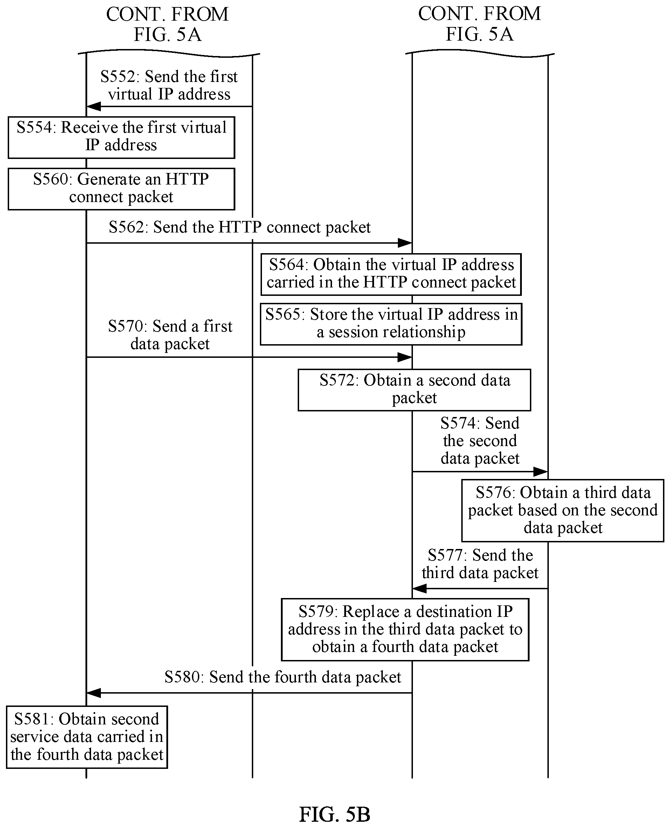

In some implementations, the SDP gateway and the SDP controller are separately disposed. The SDP gateway and the SDP controller are different physical devices that communicate with each other. For example, the SDP gateway is disposed in a general-purpose network device such as a router, a switch, or a firewall or a dedicated network device, while the SDP controller is disposed in a server that communicates with the network device. The server implements a function of the SDP controller by running software that supports SDP control and management plane functions. In some other implementations, the SDP gateway and the SDP controller are integrated, and the SDP gateway and the SDP controller are integrated into a same physical device. The following embodiment in FIG. 5A and FIG. 5B describes a process by using a case in which the SDP gateway and the SDP controller are separately deployed as an example. When the SDP gateway and the SDP controller are integrated, the following steps performed by the SDP gateway and steps performed by the SDP controller are all performed by a device into which the SDP gateway and the SDP controller are integrated. For example, when the SDP controller is integrated into the SDP gateway, the following steps performed by the SDP controller are actually performed by the SDP gateway.

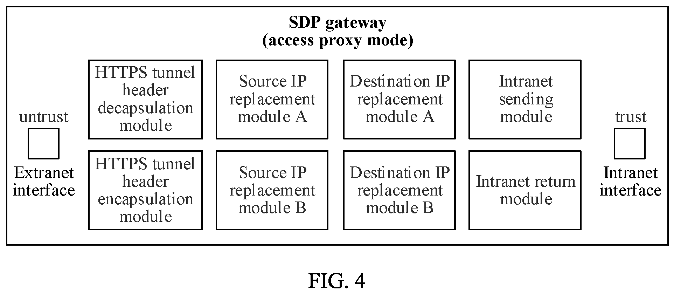

FIG. 4 is a diagram of a structure of an SDP gateway. Optionally, the network device 131 in FIG. 1 has the structure shown in FIG. 4. Optionally, the SDP gateway in FIG. 3 has the structure shown in FIG. 4.

The SDP gateway includes an extranet interface, an HTTPS tunnel header decapsulation module, a source IP replacement module A, a destination IP replacement module A, an intranet sending module, an intranet return module, a destination IP replacement module B, a source IP replacement module B, an HTTPS tunnel header encapsulation module, and an intranet interface. The extranet interface is connected to a first network. The extranet interface is configured to communicate with a terminal. The intranet interface is connected to a second network. The intranet interface is configured to communicate with a server.

The HTTPS tunnel header decapsulation module, the source IP replacement module A, the destination IP replacement module A, and the intranet sending module are all located on a forwarding path of an outbound packet. The HTTPS tunnel header decapsulation module, the source IP replacement module A, the destination IP replacement module A, and the intranet sending module are configured to forward a packet from an SDP client to the server. When the extranet interface receives the packet from the SDP client, the HTTPS tunnel header decapsulation module decapsulates an HTTPS tunnel header in the packet. The packet in an inner layer of the HTTPS tunnel header is sent to the source IP replacement module A. The source IP replacement module A replaces a source IP address in the packet with a first virtual IP address. The destination IP replacement module A replaces a destination IP address in the packet with an IP address of the server. The intranet sending module sends the packet with the source IP address and the destination IP address replaced to the server through the intranet interface.

The HTTPS tunnel header encapsulation module, the destination IP replacement module B, the source IP replacement module B, and the intranet return module are all located on a forwarding path of an inbound packet. The HTTPS tunnel header encapsulation module, the destination IP replacement module B, the source IP replacement module B, and the intranet return module are configured to forward a packet from the server to the SDP client. When the intranet interface receives the packet from the server, the intranet return module sends the received packet to the destination IP replacement module B. The destination IP replacement module B replaces a destination IP address in the packet with an IP address of the SDP client. The source IP replacement module B replaces a source IP address in the packet with an IP address of the SDP gateway. The HTTPS tunnel header encapsulation module encapsulates an HTTPS tunnel header into the packet with the source IP address and the destination IP address replaced. The extranet interface sends an encapsulated packet to the server.

FIG. 5A and FIG. 5B use a time sequence interaction diagram to further describe an intranet application access method in the scenario shown in FIG. 3. The process shown in FIG. 5A and FIG. 5B is a specific embodiment of applying the method shown in FIG. 2 in an SDP zero-trust scenario. In the embodiment shown in FIG. 5A and FIG. 5B, User 1, User 2, and User 3 are all specific examples of a user identifier, 192.168.20.11 is a specific example of a virtual IP address allocated to the user identifier User 1, and a correspondence between the user identifier and the virtual IP address is a specific example of a target correspondence.

Step S510: An SDP controller receives a correspondence between a user identifier and a virtual IP address that is configured by a network administrator.

Because the correspondence between the user identifier and the virtual IP address is configured, it is convenient to implement tracing based on a virtual IP address carried in a packet and the correspondence between the user identifier and the virtual IP address in a subsequent packet forwarding process.

In some implementations, the SDP controller performs step S510 in an SDP registration process. For example, in a process of receiving a user identifier list configured by the network administrator, the SDP controller receives an identifier that is of at least one user having permission to access a network application and that is entered by the network administrator.

Step S520: A third-party authentication system stores the correspondence between the user identifier and the virtual IP address.

Because the correspondence between the user identifier and the virtual IP address is stored in the dedicated authentication system, the SDP controller does not need to store the correspondence between the user identifier and the virtual IP address, thereby saving storage resources occupied by the correspondence between the user identifier and the virtual IP address in the SDP controller.

Step S520 is an optional step, and step S520 is not shown in FIG. 5A and FIG. 5B. In some other implementations, step S520 is omitted, and the SDP controller stores the correspondence between the user identifier and the virtual IP address.

Step S530: An SDP client generates an SPA authentication request.

Step S532: The SDP client sends the SPA authentication request to the SDP controller.

Step S534: The SDP controller receives the SPA authentication request.

Step S536: The SDP controller performs authentication on the SDP client based on the SPA authentication request.

Step S540: The SDP controller sends an authentication interface to the SDP client in response to the SDP client passing the SPA authentication.

The authentication interface is used to perform SDP authentication. For example, the SDP controller sends a JavaScript file or an HTML file to the SDP client. The SDP client parses the JavaScript file or the HTML file through a browser, to obtain code of a login page. The SDP client renders the authentication interface in the browser based on the code of the login page, to display the authentication interface.

Step S541: The SDP client receives the authentication interface, and the SDP client displays the authentication interface.

Step S542: The SDP client receives a first user identifier entered on the authentication interface.

Step S543: The SDP client generates an SDP authentication request based on the first user identifier, where the SDP authentication request includes the first user identifier.

Step S544: Send the SDP authentication request to the SDP controller.

Step S545: The SDP controller receives the SDP authentication request.

Step S546: The SDP controller performs SDP authentication on the SDP client based on the SDP authentication request.

For example, the SDP controller obtains the first user identifier carried in the SDP authentication request, and the SDP controller performs a consistency check based on the first user identifier and a second user identifier prestored in the SDP controller. If the consistency check succeeds, the SDP controller determines that the SDP client passes the SDP authentication.

Step S550: In response to the SDP client passing the authentication, the SDP controller obtains a first virtual IP address based on the user identifier in a process of authorizing the SDP client by the SDP controller.

For a manner in which the SDP controller obtains the user identifier, in some implementations, the SDP controller parses an authentication request packet, to obtain the user identifier carried in the authentication request packet.

For a manner in which the SDP controller obtains the first virtual IP address, the following uses two manners as an example for description.

In a manner 1 in which the SDP controller obtains the first virtual IP address, when step S510 is used, the SDP controller searches the correspondence between the user identifier and the virtual IP address based on the user identifier, to obtain the first virtual IP address. For example, the user identifier carried in the authentication request packet is User 1, and the SDP controller searches, based on User 1, the correspondence between the user identifier and the virtual IP address shown in Table 3, to obtain a virtual IP address 192.168.20.11. For another example, the user identifier carried in the authentication request packet is User 3, and the SDP controller searches, based on User 3, the correspondence between the user identifier and the virtual IP address shown in Table 3, to obtain a virtual IP addresses 192.168.5.101 and 540b:843c:1:a::101.

In a manner 2 in which the SDP controller obtains the first virtual IP address, when step S520 is used, the SDP controller obtains the virtual IP address by communicating with the third-party authentication system. In some implementations, the SDP controller receives the correspondence between the user identifier and the virtual IP address that is sent by the third-party authentication system. In some other implementations, the SDP controller sends, to the third-party authentication system, a query request that carries the user identifier. In response to the query request, the third-party authentication system queries the correspondence between the user identifier and the virtual IP address based on the user identifier, and obtains the first virtual IP address corresponding to the user identifier. The third-party authentication system sends the first virtual IP address to the SDP controller. The SDP controller receives the first virtual IP address from the third-party authentication system, to obtain the first virtual IP address. For example, the user identifier carried in the authentication request packet is User 1, and the SDP controller sends, to the third-party authentication system, the query request that carries User 1. In response to the query request, the third-party authentication system queries the correspondence between the user identifier and the virtual IP address based on User 1, and obtains the first virtual IP address 192.168.20.11 corresponding to the User 1. The third-party authentication system sends the first virtual IP address 192.168.20.11 to the SDP controller.

Step S552: The SDP controller sends an SDP authentication response to the SDP client, where the SDP authentication response includes the first virtual IP address.

For example, the SDP controller allocates the first virtual IP address to the SDP client as a resource, where the resource is used by the SDP client to access an intranet application. For another example, the SDP controller allocates the first virtual IP address to the SDP client as a token or a part of the token, to perform a security check on the user by using the first virtual IP address.

For example, in a process in which the SDP controller authorizes the SDP client that logs in to the account User 1, the SDP authentication response sent by the SDP controller to the SDP client includes the first virtual IP address 192.168.20.11.

For example, the SDP authentication request is an HTTP request packet, and the SDP controller sends an HTTP response packet corresponding to the HTTP request packet to the SDP client. A response body in the HTTP response packet carries the first virtual IP address.

The SDP controller obtains the first virtual IP address based on results of the SPA authentication and the SDP authentication and sends the first virtual IP address to the SDP client, which is equivalent to combining three functions of the SPA authentication, the SDP authentication, and the IP address allocation, so that only a client that passes the SPA authentication and the SDP authentication can obtain the virtual IP address, thereby reducing a security risk in which a device that does not pass the SPA authentication and the SDP authentication accesses a network application based on the virtual IP address, thereby improving network security. In addition, because the virtual IP address is delivered to the SDP client that logs in to the user identifier, the SDP client that uses the virtual IP address is associated with the user identifier, which facilitates tracing. In addition, the SDP controller controls and manages virtual IP addresses used to access an intranet server in a centralized manner, thereby improving scalability. It can be learned that the address allocation process performed by the SDP controller helps replace the DHCP to become a new generation address allocation technology.

In some implementations, the SDP controller sends the first virtual IP address and a resource list to the SDP client at the same time. The SDP controller further delivers the first virtual IP address in addition to delivering the resource list in the authorization process, which is equivalent to authorizing both a source IP address (the first virtual IP address) and a destination IP address (an IP address of a server) on which the accessed network application depends to the SDP client, so that the SDP authorization process is more perfect.

In some implementations, the SDP authentication response includes the first virtual IP address and the resource list. The SDP controller sends, to the SDP client, the SDP authentication response that carries the first virtual IP address and the resource list. Because the first virtual IP address and the resource list are transmitted by using one packet, compared with a manner in which the first virtual IP address and the resource list are sent to the SDP client by using different packets, the method reduces transmission overheads.

**In** some implementations, when the SDP controller determines that the SDP client fails the SPA authentication or the SDP authentication, the SDP controller rejects the SDP client to access the SDP gateway, and the SDP controller does not need to perform the step of obtaining the first virtual IP address based on the user identifier and delivering the first virtual IP address to the SDP client. The SDP controller delivers the virtual IP address to the SDP client only when both the SPA authentication and the SDP authentication succeed, and the SDP controller does not deliver the virtual IP address to the SDP client when either of the SPA authentication and the SDP authentication fails, thereby further improving security of the virtual IP address, and reducing a security risk caused by stealing of the virtual IP address by an attacker to an intranet.

Step S554: The SDP client receives the SDP authentication response from the SDP controller, where the SDP authentication response includes the first virtual IP address.

The SDP client parses the SDP authentication response to obtain the first virtual IP address carried in the SDP authentication response.

Step S560: In a process of establishing an encrypted tunnel between the SDP client and the SDP gateway, the SDP client generates an HTTP connect packet based on the virtual IP address delivered by the SDP controller in the authorization process.

The HTTP connect packet includes an IP basic header, a TCP header, a request line, and an HTTP header. The IP basic header includes a source IP address field and a destination IP address field. The source IP address field includes an IP address of the SDP client. The destination IP address field includes an IP address of the SDP gateway. For example, when the SDP client communicates with the SDP gateway based on an IPv4 protocol, the IP basic header in the HTTP connect packet is an IPv4 basic header, a source IP address field in the IPv4 basic header includes an IPv4 address of the SDP client, and a destination IP address field in the IPv4 basic header includes an IPv4 address of the SDP gateway. For another example, when the SDP client communicates with the SDP gateway based on an IPv6 protocol, the IP basic header in the HTTP connect packet is an IPv6 basic header, a source IP address field in the IPv6 basic header includes an IPv6 address of the SDP client, and a destination IP address field in the IPv6 basic header includes an IPv6 address of the SDP gateway.

The TCP header is encapsulated in an inner layer of the IP basic header. The TCP header includes a source port number field and a destination port number field. The source port number field in the TCP header includes a port number of a first port, and the first port is a port in the SDP client for communicating with the SDP gateway. The destination port number field includes a port number of a second port, and the second port is a port in the SDP gateway for communicating with the SDP client.

The HTTP header is encapsulated in an inner layer of the TCP header. The HTTP header includes an XFF field. The XFF field includes a virtual IP address allocated to a user. Because the XFF field carries the virtual IP address allocated to the user, the SDP gateway can obtain the virtual IP address from the XFF field, and the SDP gateway can access the intranet application based on the virtual IP address. For example, the SDP gateway can replace a source IP address in a packet with the virtual IP address, and the SDP gateway sends the packet with the source IP address replaced to the server providing the intranet application.

The HTTP request line is encapsulated in an outer layer of the HTTP header. The HTTP request line includes a request method field and a server identifier field. The request method field includes a character string connect. The server identifier field in the HTTP request line is used to carry an identifier of the server to be accessed by the SDP client.

For example, in a scenario in which the SDP client accesses the intranet application based on an IP address, the HTTP request line is used to carry an IP address of the server providing the intranet application. The SDP gateway can obtain the IP address of the server based on the HTTP request line field. Therefore, the SDP gateway can determine, based on the IP address of the server, a specific server in the intranet to which the packet from the SDP client needs to be forwarded, and replace a destination IP address in the packet from the SDP client with the IP address of the server. Optionally, the HTTP request line further carries a port number of a third port. The third port is a port in the server for communicating with the SDP gateway. The SDP gateway can determine, based on the port number of the third port, a specific port in the server in the intranet to which the packet from the SDP client is to be forwarded, and a specific port number that is used to replace a destination port number in the packet from the SDP client.

For another example, in a scenario in which the SDP client accesses the intranet application based on a domain name, the HTTP request line is used to carry a domain name of the server providing the intranet application, for example, a URL of the server. The SDP gateway can obtain the domain name of the server based on the HTTP request line field. The SDP gateway can obtain the IP address of the server based on the domain name of the server through DNS resolution. The SDP gateway can access the server by using the IP address of the server obtained through DNS.

For example, refer to FIG. 3. In the scenario shown in FIG. 3, the IP address of the SDP client is 10.19.30.123, the port number of the port in the SDP client for communicating with the SDP gateway is 4567, the IP address of the SDP gateway is 10.19.10.100, the port number of the port in the SDP gateway for communicating with the SDP client is 8443, the IP address of the server providing the intranet application in the intranet is 192.168.10.100, and the port number of the port in the server for communicating with the SDP gateway is 80.

The HTTP connect packet includes the following content:
CONNECT tcp://192.168.10.100:80 HTTP/1.1
Host: 10.19.10.100:8443
Cookie:
   SDP SESSIONID=9d952a05dd3a4d66bcd6929f452dc496;
      sapp_id=163025c0264e472e97b4fddc09339a48
   X-Forwarder-For: 192.168.20.11

For the meaning of the HTTP connect packet, the HTTP request line includes CONNECT tcp://192.168.10.100:80 HTTP/1.1, where CONNECT defines a method used in the request, indicating a request to establish a tunnel connection between the SDP gateway and the server providing the network application. 192.168.10.100:80 indicates that the IP address of the server to be connected to the SDP gateway is 192.168.10.100, and the port number of the port of the server to be connected to the SDP gateway is 80. HTTP/1.1: indicates that a used HTTP protocol version is the HTTP/1.1 protocol. Because the HTTP request line field carries CONNECT tcp://192.168.10.100:80 HTTP/1.1, the SDP gateway can determine to establish a connection to the port whose port number is 80, of the server whose IP address is 192.168.10.100:80, by using the HTTP/1.1 protocol, to subsequently forward the packet from the SDP client to the port whose port number is 80, of the server whose IP address is 192.168.10.100:80, replace the destination IP address in the packet from the SDP client with 192.168.10.100, and replace the destination port number in the packet from the SDP client with 80.

The host (Host) field indicates a host to which an access subject intends to connect and a port of the to-be-connected host. For example, the Host field is used to carry an address of the to-be-connected host and a port number of the port of the to-be-connected host. In the foregoing example, the SDP client serves as the access subject, and the host to be connected to the SDP client is the SDP gateway. Therefore, the SDP client writes the IP address (10.19.10.100) of the SDP gateway and the port number (8443) of the SDP gateway into the Host field, so that content of the Host field includes 10.19.10.100:8443.

The Cookie field is used to transfer a session status. The SDP zero-trust scenario involves a session established between the SDP client and the SDP gateway and a session established between the SDP gateway and the server. To distinguish between the two sessions, the following uses "a first session" to describe the session between the SDP client and the SDP gateway, and uses "a second session" to describe the session between the SDP gateway and the server.

The SDP SESSIONID field is used to carry an identifier of the first session. In the foregoing example, the identifier of the first session is a character string 9d952a05dd3a4d66bcd6929f452dc4. Because the SDP SESSIONID field carries the identifier of the first session, the SDP gateway can obtain the identifier of the first session based on the SDP SESSIONID field, and the SDP gateway can establish the first session based on the identifier of the first session, and maintain a status of the first session based on the identifier of the first session.

The app_id field is used to carry an identifier of the second session. In the foregoing example, the identifier of the second session is 163025c0264e472e97b4fddc09339a48. Because the app_id field carries the identifier of the second session, the SDP gateway can establish the second session based on the identifier of the second session, and maintain a status of the second session based on the identifier of the second session. In some implementations, the SDP gateway stores a correspondence between the identifier of the first session and the identifier of the second session in a session table, so as to associate the two sessions. Therefore, the SDP gateway can forward an inbound packet from the server to the SDP client based on the association relationship between the two sessions, and restore a destination IP address in the inbound packet from a virtual IP address to a real IP address of the SDP client.

The X-Forwarder-For field carries the virtual IP address 192.168.20.11. The SDP gateway can determine to replace a source IP address in the packet from the SDP client with the virtual IP address 192.168.20.11.

10.19.30.123:4567->10.19.10.100:8443 in FIG. 3 means that the source IP address field in the IP basic header includes the IP address 10.19.30.123 of the SDP client, and the destination address in the IP basic header includes the IP address 10.19.10.100 of the SDP gateway. The TCP header includes a source port number field and a destination port number field. The source port number field includes a port number 4567 of a port of the SDP client, and the destination port number field includes a port number 8443 of a port of the SDP gateway.

Step S562: The SDP client sends the HTTP connect packet including the first virtual IP address to the SDP gateway.

The SDP client sends the HTTP connect packet including the first virtual IP address to the SDP gateway, to trigger the SDP gateway to establish a tunnel between the SDP client and the SDP gateway, and enable the SDP gateway to obtain the first virtual IP address.

Step S564: The SDP gateway receives the HTTP connect packet from the SDP client. The SDP gateway obtains the virtual IP address carried in the HTTP connect packet.

For example, the SDP gateway parses the XFF field in the HTTP connect packet to obtain the virtual IP address carried in the XFF field. The SDP gateway extracts the virtual IP address from the HTTP connect packet, to subsequently access the intranet server by using the virtual IP address as the source IP address.

In some implementations, after the SDP gateway receives the HTTP connect packet, the SDP gateway further establishes an HTTS tunnel between the SDP gateway and the SDP client based on the IP address of the SDP client, the IP address of the SDP gateway, the port number of the SDP client, and the port number of the SDP gateway. The HTTS tunnel is used to encrypt and transmit data between the SDP client and SDP gateway. Endpoints of the HTTS tunnel include the SDP gateway and the SDP client.

Step S565: The SDP gateway stores the virtual IP address in a session relationship.

The session relationship includes a correspondence between the virtual IP address and the IP address of the SDP client. The session relationship is, for example, one entry or a combination of a plurality of entries in the session table stored in the SDP gateway. In the session relationship, the IP address of the SDP client is a real IP address of a terminal that runs the SDP client. For example, the IP address of the SDP client is obtained by the SDP gateway from the source IP address field in the IP basic header in the HTTP connect packet. For example, the virtual IP address is obtained by the SDP gateway from the XFF field in the HTTP connect packet.

Purposes of the session relationship include forwarding the inbound packet from the server to the SDP client and forwarding a subsequent packet of the HTTP connect packet from the SDP client to the server. Specifically, because the SDP gateway stores the correspondence between the virtual IP address and the IP address of the SDP client, when the SDP gateway receives the inbound packet from the server, the SDP gateway searches the correspondence between the virtual IP address and the IP address of the SDP client based on the virtual IP address carried in the inbound packet, to obtain the IP address of the SDP client, so as to forward the inbound packet to the terminal based on the IP address of the SDP client. When the SDP gateway receives the subsequent packet of the HTTP connect packet from the SDP client, the SDP gateway searches a correspondence between IP addresses of the SDP client based on the IP address of the SDP client carried in the subsequent packet, to obtain the virtual IP address, so as to replace a source IP address in the subsequent packet based on the virtual IP address, and forward the subsequent packet whose source IP address is replaced with the virtual IP address to the server.

**In** some implementations, the session relationship further includes the IP address of the server. For example, the IP address of the server is obtained by the SDP gateway from the HTTP request line in the HTTP connect packet. Because the SDP gateway stores a correspondence between the virtual IP address, the IP address of the server, and the IP address of the SDP client, when the SDP gateway receives the inbound packet from the server, the SDP gateway searches the correspondence between the virtual IP address, the IP address of the server, and the IP address of the SDP client based on the virtual IP address and the IP address of the server carried in the inbound packet, to obtain the IP address of the SDP client, so as to forward the inbound packet to the terminal based on the IP address of the SDP client. When the SDP gateway receives the subsequent packet of the HTTP connect packet from the SDP client, the SDP gateway searches the correspondence between the virtual IP address, the IP address of the server, and the IP address of the SDP client based on the IP address of the SDP client and the IP address of the server carried in the subsequent packet, to obtain the virtual IP address, so as to replace a source IP address in the subsequent packet based on the virtual IP address, and forward the subsequent packet whose source IP address is replaced with the virtual IP address to the server. In addition, in a scenario in which a plurality of servers are deployed in the intranet, the SDP gateway further uses an IP address of a server when searching the session relationship, so that sessions corresponding to different servers can be distinguished. Therefore, inbound packets from the plurality of servers and outbound packets sent to different servers can be processed more flexibly and accurately.

**In** some implementations, the session relationship stored in the SDP gateway further includes the IP address of the SDP gateway. For example, the IP address of the SDP gateway is obtained by the SDP gateway from the Host field in the HTTP connect packet.

In some implementations, the session relationship stored in the SDP gateway includes a parameter of the first session and a parameter of the second session. The parameter of the first session includes the IP address of the SDP client and the IP address of the SDP gateway. The parameter of the second session includes the virtual IP address and the IP address of the server.

In a specific example, in the scenario shown in FIG. 3, the session relationship is shown in Table 4.

**Table 4 Session relationship**

| Parameter of a first session | | Parameter of a second session | |
|---|---|---|---|
| Source IP address (IP address of an SDP client) | Destination IP address (IP address of an SDP gateway) | Source IP address (first virtual IP address) | Destination IP address (IP address of a server) |
| 10.19.30.123 | 10.19.10.100 | 192.168.20.11 | 192.168.10.100 |

In some other implementations, the parameter of the first session in the session relationship stored in the SDP gateway includes a quintuple of the first session. The parameter of the second session includes a quintuple of the second session. The quintuple of the first session includes the IP address of the SDP client, the IP address of the SDP gateway, the port number of the SDP client, the port number of the SDP gateway, and a first protocol identifier, where the first protocol identifier identifies a transport layer protocol based on which communication between the SDP client and the SDP gateway is performed. The quintet of the second session includes the first virtual IP address, the IP address of the server, the port number of the server, the port number of the SDP gateway, and a second protocol identifier, where the second protocol identifier identifies a transport layer protocol based on which communication between the SDP gateway and the server is performed. The port number of the SDP client is optionally carried in the source port number field in the TCP header in the HTTP connect packet. The port number of the SDP gateway is optionally carried in the destination port number field in the TCP header in the HTTP connect packet. In a specific example, in the scenario shown in FIG. 3, the session relationship is shown in Table 5.

**Table 5 Session relationship**

| Parameter of a first session | | | | | Parameter of a second session | | | | |
|---|---|---|---|---|---|---|---|---|---|
| Source IP address (IP address of an SDP client) | Destination IP address (IP address of an SDP gateway) | Source port number (port number of an SDP client) | Destination port number (port number of an SDP gateway) | First protocol identifier | Source IP address (first virtual IP address) | Destination IP address (IP address of a server) | Source port number (port number of an SDP gateway) | Destination port number (port number of a server) | Second protocol identifier |
| 10.19.30.123 | 10.19.10.100 | 4567 | 8443 | TCP | 192.168.20.11 | 192.168.10.100 | 4567 | 80 | TCP |

Optionally, the session relationship stored in the SDP gateway further includes the identifier of the first session. For example, the identifier of the first session is obtained by the SDP gateway from the SDP SESSIONID field in the HTTP header in the HTTP connect packet.

Optionally, the session relationship stored in the SDP gateway further includes the identifier of the second session. For example, the identifier of the second session is obtained by the SDP gateway from the app_id field in the HTTP header in the HTTP connect packet.

Step S570: The SDP client generates a first data packet. The SDP client sends the first data packet to the SDP gateway through an HTTPS tunnel.

The first data packet is equivalent to the subsequent packet of the HTTP connect packet. The first data packet is a packet in the first session established based on the HTTP connect packet. A source IP address in the first data packet includes the real IP address of the SDP client (for example, an IP address in the internet or an IP address provided by a public WLAN network accessed by the SDP client). A destination IP address in the first data packet includes the IP address of the SDP gateway. For example, the source IP address in the first data packet includes the IP address 10.19.30.123. The destination IP address in the first data packet includes 10.19.10.100.

**In** some implementations, the first data packet includes an IP basic header, a TCP header, an HTTPS header, an application layer packet header, and a payload field. The HTTPS header is used to carry a parameter for establishing an HTTPS tunnel between the SDP client and the SDP gateway. A source address field in the basic IP header includes the real IP address of the SDP client. A destination address field in the IP basic header includes the IP address of the network device. The TCP header is encapsulated in an inner layer of the IP basic header. A source port number field in the TCP header includes the port number of the SDP client. A destination port number field in the TCP header includes the port number of the SDP gateway. The HTTPS header includes an HTTP header and a TLS/SSL header. The TLS/SSL header is encapsulated in an inner layer of the TCP header. The TLS/SSL header is used to carry an identifier of an encryption algorithm, a certificate, and an identifier of a message integrity check algorithm. The HTTP header is encapsulated in an inner layer of the TLS/SSL header. The application layer packet header is, for example, an HTTPS header or an HTTP header. The application layer packet header includes the IP address of the intranet server. In some implementations, the application layer packet header includes the virtual IP address of the SDP client. For example, the application layer packet header includes an HTTP header, and an XFF header in the HTTP header includes the virtual IP address of the SDP client. The payload field is encapsulated in an inner layer of the application layer packet header. The payload field is used to carry first service data to be transmitted by the SDP client to the network application.

Step S572: The SDP gateway receives the first data packet from the SDP client. The SDP gateway replaces the source IP address in the first data packet based on the first virtual IP address, to obtain a second data packet.

Step S574: The SDP gateway sends the second data packet to the server.

In some implementations, the SDP gateway changes the source IP address in the IP basic header in the received first data packet from the real IP address of the SDP client to the first virtual IP address, so that a source IP address in an IP basic header in the second data packet sent by the SDP gateway to the intranet server is the first virtual IP address. For example, the SDP gateway changes content of the source IP address field in the IP basic header in the first data packet from the IP address 10.19.30.123 of the SDP client to the first virtual IP address 192.168.20.11, so that content of the source IP address field in the IP basic header in the second data packet sent by the SDP client to the server is the first virtual IP address 192.168.20.11.

In some implementations, the SDP gateway changes the destination IP address in the IP basic header in the received first data packet from the IP address of the SDP gateway to the IP address of the intranet server, so that a destination IP address in an IP basic header in the second data packet sent by the SDP gateway to the intranet server is the IP address of the intranet server. For example, the SDP gateway changes content of the destination IP address field in the IP basic header in the received first data packet from the IP address 10.19.10.100 of the SDP gateway to the IP address 192.168.10.100 of the server, so that content of the destination IP address field in the IP basic header in the second data packet sent by the SDP gateway to the server is the IP address 192.168.10.100 of the server.

In some implementations, when the first data packet includes the HTTPS header encapsulated in the outer layer of the application layer packet header, the SDP gateway further decapsulates the HTTPS header in the outer layer of the first data packet. Decapsulating the HTTPS header in the outer layer is equivalent to terminating the HTTPS tunnel between the SDP client and the SDP gateway, so that the SDP gateway obtains the application layer packet header encapsulated in the inner layer of the HTTPS header and the payload field, to forward the second data packet including the application layer packet header and the payload field to the server.

How the SDP gateway obtains the first virtual IP address when forwarding the data packet includes the following implementation 1 and implementation 2.

In the implementation 1 in which the SDP gateway obtains the first virtual IP address, when the application layer packet header in the first data packet carries the first virtual IP address, the SDP gateway parses the application layer packet header in the first data packet, to obtain the first virtual IP address carried in the application layer packet header, so as to send the second data packet to the intranet server by using the first virtual IP address as the destination IP address.

In the implementation 2 in which the SDP gateway obtains the first virtual IP address, when the application layer packet header in the first data packet carries the first virtual IP address, the SDP gateway obtains the parameter of the first session carried in the first data packet, and the SDP gateway searches the session relationship based on the parameter of the first session, to obtain the first virtual IP address corresponding to the parameter of the first session.

Using an example in which the session relationship is searched based on the source IP address of the first session and the destination IP address of the first session, with reference to the specific example provided in Table 4, the SDP gateway matches the source IP address carried in the IP basic header in the first data packet with the IP address 10.19.30.123 of the SDP client in the session relationship, and the SDP gateway matches the destination IP address carried in the IP basic header in the first data packet with the IP address 10.19.10.100 of the SDP gateway in the session relationship. The SDP gateway obtains the first virtual IP address 192.168.20.11 from the session relationship in response to the source IP address carried in the IP basic header in the first data packet and the IP address 10.19.30.123 of the SDP client in the session relationship meeting a matching condition, and the destination IP address carried in the IP basic header in the first data packet and the IP address 10.19.10.100 of the SDP gateway in the session relationship meeting a matching condition.

Using an example in which the session relationship is searched based on the quintuple of the first session, with reference to the specific example provided in Table 5, the SDP gateway matches the source IP address carried in the IP basic header in the first data packet with the IP address 10.19.30.123 of the SDP client in the session relationship, and the SDP gateway matches the destination IP address carried in the IP basic header in the first data packet with the IP address 10.19.10.100 of the SDP gateway in the session relationship, the SDP gateway matches the source port number carried in the TCP header in the first data packet with the port number 4567 of the SDP client in the session relationship, and the SDP gateway matches the destination port number carried in the TCP header in the first data packet with the port number 8443 of the SDP gateway in the session relationship. The SDP gateway matches the transport layer protocol identifier carried in the first data packet with the first protocol identifier TCP in the session relationship. The SDP gateway obtains the first virtual IP address 192.168.20.11 from the session relationship in response to the source IP address carried in the IP basic header in the first data packet and the IP address 10.19.30.123 of the SDP client in the session relationship meeting a matching condition, the destination IP address carried in the IP basic header in the first data packet and the IP address 10.19.10.100 of the SDP gateway in the session relationship meeting a matching condition, the source port number carried in the TCP header in the first data packet and the port number 4567 of the SDP client in the session relationship meeting a matching condition, the destination port number carried in the TCP header in the first data packet and the port number 8443 of the SDP gateway in the session relationship meeting a matching condition, and the transport layer protocol identifier carried in the first data packet and the first protocol identifier TCP in the session relationship meeting a matching condition.

How the SDP gateway obtains the IP address of the intranet server when forwarding the data packet includes the following implementation 1 and implementation 2.

In the implementation 1 in which the SDP gateway obtains the IP address of the intranet server, when the application layer packet header in the first data packet carries the IP address of the intranet server, the SDP gateway parses the application layer packet header in the first data packet, to obtain the IP address of the intranet server carried in the application layer packet header, so as to send the second data packet to the intranet server by using the IP address of the intranet server as the destination IP address.

In the implementation 2 in which the SDP gateway obtains the IP address of the intranet server, when the application layer packet header in the first data packet carries the IP address of the intranet server, the SDP gateway obtains the parameter of the first session carried in the first data packet, and the SDP gateway searches the session relationship based on the parameter of the first session, to obtain the IP address of the intranet server corresponding to the parameter of the first session.

Using an example in which the session relationship is searched based on the source IP address of the first session and the destination IP address of the first session, with reference to the specific example provided in Table 4, the SDP gateway matches the source IP address carried in the IP basic header in the first data packet with the IP address 10.19.30.123 of the SDP client in the session relationship, and the SDP gateway matches the destination IP address carried in the IP basic header in the first data packet with the IP address 10.19.10.100 of the SDP gateway in the session relationship. The SDP gateway obtains the IP address 192.168.10.100 of the intranet server from the session relationship in response to the source IP address carried in the IP basic header in the first data packet and the IP address 10.19.30.123 of the SDP client in the session relationship meeting a matching condition, and the destination IP address carried in the IP basic header in the first data packet and the IP address 10.19.10.100 of the SDP gateway in the session relationship meeting a matching condition.

Using an example in which the session relationship is searched based on the quintuple of the first session, with reference to the specific example provided in Table 5, the SDP gateway matches the source IP address carried in the IP basic header in the first data packet with the IP address 10.19.30.123 of the SDP client in the session relationship, and the SDP gateway matches the destination IP address carried in the IP basic header in the first data packet with the IP address 10.19.10.100 of the SDP gateway in the session relationship, the SDP gateway matches the source port number carried in the TCP header in the first data packet with the port number 4567 of the SDP client in the session relationship, and the SDP gateway matches the destination port number carried in the TCP header in the first data packet with the port number 8443 of the SDP gateway in the session relationship. The SDP gateway matches the transport layer protocol identifier carried in the first data packet with the first protocol identifier TCP in the session relationship. The SDP gateway obtains the IP address 192.168.10.100 of the intranet server from the session relationship in response to the source IP address carried in the IP basic header in the first data packet and the IP address 10.19.30.123 of the SDP client in the session relationship meeting a matching condition, the destination IP address carried in the IP basic header in the first data packet and the IP address 10.19.10.100 of the SDP gateway in the session relationship meeting a matching condition, the source port number carried in the TCP header in the first data packet and the port number 4567 of the SDP client in the session relationship meeting a matching condition, the destination port number carried in the TCP header in the first data packet and the port number 8443 of the SDP gateway in the session relationship meeting a matching condition, and the transport layer protocol identifier carried in the first data packet and the first protocol identifier TCP in the session relationship meeting a matching condition.

Step S575: The server receives the second data packet from the SDP gateway.

The foregoing focuses on a process of forwarding an outbound packet by the SDP gateway. Because the SDP gateway replaces the source IP address in the data packet carrying the first service data with the virtual IP address in the intranet, the first service data from the SDP client is transmitted to the server, and from a perspective of the server, the server considers the first service data as originate from the virtual IP address from the intranet, and does not need to be aware that the data packet actually originates from an IP address from an extranet, thereby simplifying an inbound route. The following describes the process of forwarding the inbound packet by using an example.

Step S576: The server obtains a third data packet based on the second data packet.

Step S577: The server sends the third data packet to the SDP gateway.

The third data packet includes second service data to be transmitted by the server to the SDP client. A source IP address in the third data packet includes the IP address of the server. A destination IP address in the third data packet includes the first virtual IP address. In an example scenario, after the server obtains the first service data from the SDP client based on the second data packet, the server sends the third data packet to feed back the second service data to the SDP client, so as to meet a requirement of an interactive service scenario. For example, the network application is a database application, and the first service data includes a query statement of target data in the database application. The server executes the query statement, searches the database for the target data, adds the obtained target data to the third data packet, and sends the third data packet to the SDP client.

For a packet encapsulation format of the third data packet, for example, the third data packet includes an IP basic header, a transport layer protocol header, and a payload field. A source IP address field in the IP basic header includes the IP address of the server. A destination IP address field in the IP basic header includes the first virtual IP address. A source port number field in the transport layer protocol header includes the port number of the server. A destination port number field in the transport layer protocol header includes the port number of the SDP gateway. The payload field includes the second service data.

In some implementations, the server parses the payload field in the second data packet to obtain the first service data from the SDP client. The server processes the first service data to obtain the second service data. The server parses the IP basic header in the second data packet to obtain the first virtual IP address. The server generates the third data packet based on the second service data and the first virtual IP address.

Step S579: The SDP gateway receives the third data packet from the server. The SDP gateway replaces the destination IP address in the third data packet with the IP address of the SDP client, to obtain a fourth data packet.

A source IP address in the fourth data packet includes the IP address of the SDP gateway. A destination IP address in the fourth data packet includes the IP address (the real IP address) of the SDP client. The fourth data packet includes the second service data.

Because the source IP address in the uplink data packet is changed by the SDP gateway from the real IP address of the SDP client to the first virtual IP address, the server returns the inbound packet by using the first virtual IP address as the destination IP address. The SDP gateway changes the destination IP address in the inbound packet from the first virtual IP address to the IP address (the real IP address) of the SDP client, so as to transfer the second service data to the SDP client based on the IP address of the SDP client, thereby reducing a risk of interruption of transmission of the second service data caused by unreachable route of the first virtual IP address in the internet.

In some implementations, the SDP gateway further replaces the source IP address carried in the third data packet with the IP address of the SDP gateway, to obtain the fourth data packet.

In some implementations, the SDP gateway further replaces the source port number carried in the third data packet with the port number of the SDP gateway, to obtain the fourth data packet.

In some implementations, the SDP gateway further replaces the destination port number carried in the third data packet with the port number of the SDP client, to obtain the fourth data packet.

In some implementations, the SDP gateway further encapsulates an HTTPS header into the third data packet, to obtain the fourth data packet.

For a packet encapsulation format of the fourth data packet, for example, the fourth data packet includes an IP basic header, a transport layer protocol header, an HTTPS header, and a payload field. A source IP address field in the IP basic header in the fourth data packet includes the IP address of the SDP gateway. A destination IP address field in the IP basic header in the fourth data packet includes the IP address of the SDP client. A source port number field in the transport layer protocol header includes the port number of the SDP gateway. A destination port number field in the transport layer protocol header includes the port number of the SDP client. The payload field includes the second service data.

A time sequence of replacing the source IP address and the destination IP address when the SDP gateway forwards the downlink data packet is not limited in this embodiment. For example, the SDP gateway first replaces the source IP address in the downlink data packet, and then replaces the destination IP address in the downlink data packet; or the SDP gateway first replaces the destination IP address in the downlink data packet, and then replaces the source IP address in the downlink data packet.

For a manner in which the SDP gateway obtains the IP address of the SDP client in the process of forwarding the downlink data packet, in some implementations, the SDP gateway obtains the parameter of the second session carried in the third data packet. The SDP gateway searches, based on the parameter of the second session, the session relationship stored in the SDP gateway, to obtain the parameter of the first session corresponding to the parameter of the second session, where the parameter of the first session includes the IP address of the SDP client.

For example, the session relationship is searched based on the source IP address and the destination IP address. For example, the session relationship includes the source IP address (the first virtual IP address) of the second session, the destination IP address (the IP address of the server) of the second session, and the source IP address (the IP address of the SDP client) of the first session. The SDP gateway searches the session relationship based on the source IP address (the IP address of the server) carried in the third data packet and the destination IP address (the first virtual IP address) carried in the third data packet, to obtain the source IP address (the IP address of the server) carried in the third data packet and the source IP address of the first session corresponding to the destination IP address (the first virtual IP address) carried in the third data packet, so as to obtain the IP address of the SDP client.

With reference to the specific example provided in Table 4, for example, the IP basic header in the third data packet carries the source IP address 192.168.10.100, and the IP basic header in the third data packet carries the destination IP address 192.168.20.11. The SDP gateway matches the source IP address 192.168.10.100 in the third data packet with the destination IP address (the IP address of the server) 192.168.10.100 of the second session in the session relationship, and the SDP gateway matches the destination IP address 192.168.20.11 in the third data packet with the source IP address (the first virtual IP address) 192.168.20.11 of the second session in the session relationship. In response to the source IP address 192.168.10.100 in the third data packet matching the destination IP address (the IP address of the server) 192.168.10.100 of the second session in the session relationship, and the destination IP address 192.168.20.11 in the third data packet matching the source IP address (the first virtual IP address) 192.168.20.11 of the second session in the session relationship, the SDP gateway obtains the source IP address (the IP address of the SDP client) 10.19.30.123 of the first session corresponding to the second session and the destination IP address (the IP address of the SDP gateway) 10.19.10.100 of the first session. The SDP gateway replaces the destination IP address 192.168.20.11 carried in the third data packet with the source IP address (the IP address of the SDP client) 10.19.30.123 of the first session. The SDP gateway replaces the source IP address 192.168.10.100 carried in the third data packet with the destination IP address (the IP address of the SDP gateway) 10.19.10.100 of the first session, to obtain the fourth data packet. The IP basic header in the fourth data packet carries the source IP address 10.19.10.100, and the IP basic header in the third data packet carries the destination IP address 10.19.30.123.

For example, the session relationship is searched based on the quintuple. With reference to the session relationship provided in Table 5, for example, the session relationship includes the source IP address (the first virtual IP address) of the second session, the destination IP address (the IP address of the server) of the second session, the source port number (the port number of the SDP gateway) of the second session, the destination port number (the port number of the server) of the second session, the protocol identifier (the second protocol identifier) of the second session, the source IP address (the IP address of the SDP client) of the first session, the destination IP address (the IP address of the SDP gateway) of the first session, the source port number (the port number of the SDP client) of the first session, the destination port number (the port number of the SDP gateway) of the first session, and the protocol identifier (the first protocol identifier) of the first session. The SDP gateway searches the session relationship based on the source IP address (the IP address of the server) carried in the third data packet and the destination IP address (the first virtual IP address) carried in the third data packet, and searches the session relationship based on the source port number (the port number of the server) carried in the third data packet and the destination port number (the port number of the SDP gateway) carried in the third data packet, to obtain the source IP address (the IP address of the server) carried in the third data packet, the destination IP address (the first virtual IP address) carried in the third data packet, the source port number (the port number of the server) carried in the third data packet, and the source IP address of the first session corresponding to the destination port number (the port number of the SDP gateway) carried in the third data packet, so as to obtain the IP address of the SDP client.

Step S580: The SDP gateway sends the fourth data packet to the SDP client.

Step S581: The SDP client receives the fourth data packet from the SDP gateway, and obtains the second service data carried in the fourth data packet.

Step S590: An audit tracing system performs tracing based on the virtual IP address carried in the source IP address field in a to-be-traced packet.

In the method provided in this embodiment, in the SDP zero-trust scenario, the SDP gateway replaces the source IP address in the packet from the SDP client with the virtual IP address of the user identifier, and the IP address sent by the SDP gateway to the intranet server corresponds to the user identifier, thereby implementing accurate tracing in a remote or local network access scenario.

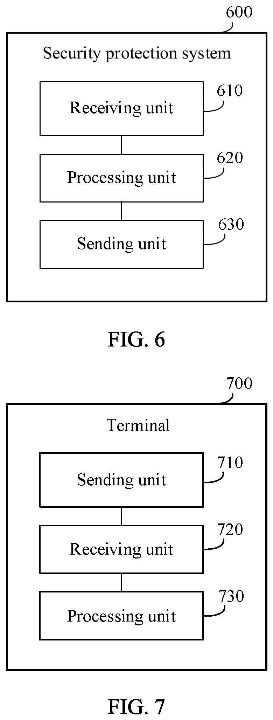

FIG. 6 is a diagram of a structure of a security protection system 600 according to an embodiment of this application. The security protection system 600 shown in FIG. 6 is, for example, disposed between the terminal 110 and the server 120 shown in FIG. 1. The security protection system 600 shown in FIG. 6 is, for example, the security protection system 130 shown in FIG. 1. The security protection system 600 shown in FIG. 6 includes, for example, the controller 132 and the network device 131 in FIG. 1. The security protection system 600 includes a receiving unit 610, a processing unit 620, and a sending unit 630.

In some implementations, the security protection system 600 shown in FIG. 6 is configured to perform the steps performed by the security protection system in the method shown in FIG. 2. The receiving unit 610 is configured to perform S220. The processing unit 620 is configured to perform S222. The sending unit 630 is configured to perform S224.

In some implementations, the receiving unit 610 is further configured to perform S206, S230, S510, S534, S545, S554, S564, the receiving step in S572, and the receiving step in S579. The processing unit 620 is further configured to perform S208, S210, S232, S536, S546, S550, S560, the packet generation step in S572, and the address replacement step in S579. The sending unit 630 is further configured to perform S234, S540, S212, S544, S552, S574, and S580. In some implementations, the security protection system 600 further includes a storage unit, configured to perform S565. In some implementations, the security protection system 600 includes the SDP controller and the SDP gateway shown in FIG. 3. In some implementations, the security protection system 600 includes the SDP gateway shown in FIG. 4.

The described apparatus embodiment in FIG. 6 is merely an example. For example, division into the units is merely logical function division, and may be other division during actual implementation. For example, a plurality of units or components may be combined or integrated into another system, or some features may be ignored or may not be performed. Functional units in embodiments of this application may be integrated into one processing unit, or each of the units may exist alone physically, or two or more of the units may be integrated into one unit.

All or some of the units in the security protection system 600 are implemented by using software, hardware, firmware, or any combination thereof.

With reference to the following security protection system 800, the following describes some possible implementations of implementing the functional units in the security protection system 600 by using hardware or software.

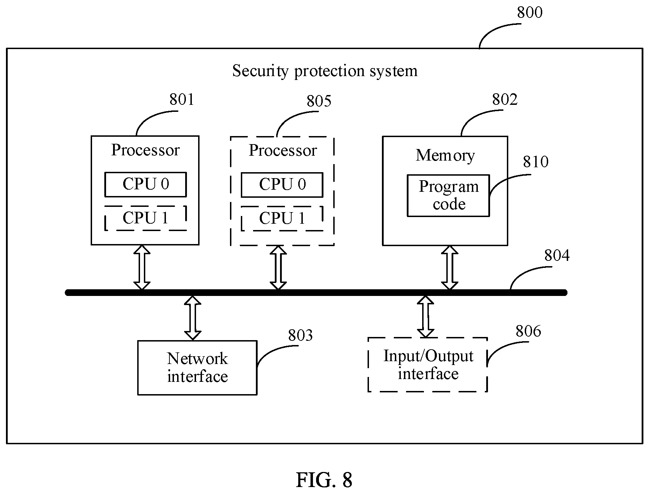

When software is used for implementation, for example, the processing unit 620 is implemented by a software functional unit that is generated after at least one processor 801 in FIG. 8 reads program code stored in a memory 802.

When hardware is used for implementation, the units in FIG. 6 are separately implemented by different hardware in the security protection system 800. For example, the processing unit 620 is implemented by some processing resources (for example, one core or two cores in a multi-core processor) in the at least one processor 801 in FIG. 8, and the processing unit 620 is implemented by another processing resource (for example, another core in the multi-core processor) in the at least one processor 801 in FIG. 8, a field programmable gate array (field programmable gate array, FPGA), or a programmable device such as a coprocessor. The receiving unit 610 and the sending unit 630 are implemented by the network interface 803 in FIG. 8.

FIG. 7 is a diagram of a structure of a terminal 700 according to an embodiment of this application. The terminal 700 shown in FIG. 7 is, for example, disposed in the system shown in FIG. 1, and the terminal 700 shown in FIG. 7 is, for example, the terminal 110 shown in FIG. 1. The terminal 700 includes a sending unit 710, a receiving unit 720, and a processing unit 730. The sending unit 710 is configured to perform S204, S218, S532, S544, and S562. The receiving unit 720 is configured to perform S214, S534, S542, S554, and S581. The processing unit 730 is configured to perform S202, S216, S530, S541, S543, S560, and S570. The sending unit 710 is further configured to send a first packet to a security protection system. In some implementations, the terminal 700 includes the SDP client shown in FIG. 3. In some implementations, the terminal 700 further includes a display unit, and the display unit is configured to perform S541.

The described apparatus embodiment in FIG. 7 is merely an example. For example, division into the units is merely logical function division, and may be other division during actual implementation. For example, a plurality of units or components may be combined or integrated into another system, or some features may be ignored or may not be performed. Functional units in embodiments of this application may be integrated into one processing unit, or each of the units may exist alone physically, or two or more of the units may be integrated into one unit.

All or some of the units in the terminal 700 are implemented by software, hardware, firmware, or any combination thereof.

With reference to the following terminal 900, the following describes some possible implementations of implementing the functional units in the terminal 700 by using hardware or software.

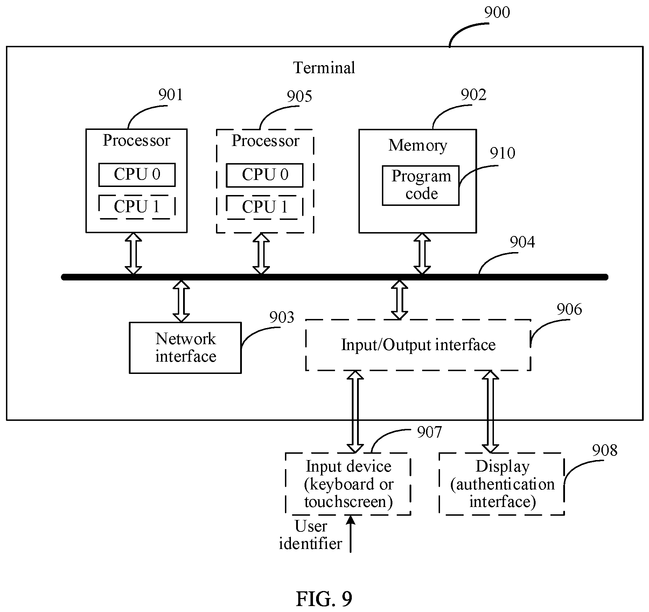

When software is used for implementation, for example, the processing unit 730 is implemented by a software functional unit that is generated after at least one processor 901 in FIG. 9 reads program code stored in a memory 902.

When hardware is used for implementation, for example, the units in FIG. 7 are separately implemented by different hardware in the terminal 900. For example, the processing unit 730 is implemented by some processing resources (for example, one core or two cores in a multi-core processor) in the at least one processor 901 in FIG. 9, and the processing unit 730 is implemented by another processing resource (for example, another core in the multi-core processor) in the at least one processor 901 in FIG. 9, a field programmable gate array (field programmable gate array, FPGA), or a programmable device such as a coprocessor. The receiving unit 720 and the sending unit 710 are implemented by the network interface 903 in FIG. 9.

FIG. 8 is a diagram of a structure of a security protection system 800 according to an embodiment of this application.

The security protection system 800 shown in FIG. 8 is, for example, disposed between the terminal 110 and the server 120 shown in FIG. 1. The security protection system 800 shown in FIG. 8 is, for example, the security protection system 130 shown in FIG. 1. The security protection system 800 shown in FIG. 8 includes, for example, the controller 132 and the network device 131 in FIG. 1. The security protection system 800 includes at least one processor 801, a memory 802, and at least one network interface 803. In some implementations, the security protection system 800 shown in FIG. 8 is configured to perform the steps performed by the security protection system in the method shown in FIG. 2. The network interface 803 is configured to perform S220. The processor 801 is configured to perform S222. The network interface 803 is configured to perform S224.

In some implementations, the network interface 803 is further configured to perform S206, S230, S510, S534, S545, S554, S564, the receiving step in S572, and the receiving step in S579. The processor 801 is further configured to perform S208, S210, S232, S536, S546, S550, S560, the packet generation step in S572, and the address replacement step in S579. The network interface 803 is further configured to perform S234, S540, S212, S544, S552, S574, and S580. In some implementations, the security protection system 800 further includes a storage unit, configured to perform S565. In some implementations, the security protection system 800 includes the SDP controller and the SDP gateway shown in FIG. 3. In some implementations, the security protection system 800 includes the SDP gateway shown in FIG. 4.

The processor 801 is, for example, a general-purpose central processing unit (central processing unit, CPU), a network processor (network processor, NP), a graphics processing unit (graphics processing unit, GPU), a neural network processing unit (neural network processing unit, NPU), a data processing unit (data processing unit, DPU), a microprocessor, or one or more integrated circuits configured to implement the solutions of this application. For example, the processor 801 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The memory 802 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that is accessible by a computer, but is not limited thereto. Optionally, the memory 802 exists independently, and is connected to the processor 801 through an internal connection 804. Alternatively, the memory 802 and the processor 801 are optionally integrated together.

The network interface 803 is configured to communicate with another device or a communication network by using any transceiver-type apparatus. The network interface 803 includes, for example, at least one of a wired network interface or a wireless network interface. The wired network interface is, for example, an ethernet interface. The ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 801 includes one or more CPUs, for example, a CPU 0 and a CPU 1 shown in FIG. 8.

In some embodiments, the security protection system 800 optionally includes a plurality of processors, for example, a processor 801 and a processor 805 shown in FIG. 8. Each of these processors is, for example, a single-core processor (single-CPU) or a multi-core processor (multi-CPU). The processor herein is optionally one or more devices, circuits, and/or processing cores configured to process data (for example, computer program instructions).

In some embodiments, the security protection system 800 further includes an internal connection 804. The processor 801, the memory 802, and the at least one network interface 803 are connected through the internal connection 804. The internal connection 804 includes a channel for transmitting information between the foregoing components. Optionally, the internal connection 804 is a board or a bus. Optionally, the internal connection 804 is classified into an address bus, a data bus, a control bus, and the like.

Optionally, the processor 801 implements the methods in the foregoing embodiments by reading the program code stored in the memory 802, or the processor 801 implements the methods in the foregoing embodiments by using program code stored therein. When the processor 801 implements the methods in the foregoing embodiments by reading the program code stored in the memory 802, the memory 802 stores the program code 810 for implementing the methods provided in embodiments of this application.

For more details of implementing the foregoing functions by the processor 801, refer to the descriptions in the foregoing method embodiments. Details are not described herein again.

FIG. 9 is a diagram of a structure of a terminal 900 according to an embodiment of this application.

The terminal 900 shown in FIG. 9 is, for example, disposed in the system shown in FIG. 1, and the terminal 900 shown in FIG. 9 is, for example, the terminal 110 shown in FIG. 1.

The terminal 900 includes at least one processor 901, a memory 902, and at least one network interface 903. The network interface 903 is configured to perform S204, S218, S532, S544, S562, S214, S534, S542, S554, and S581. The processor 901 is configured to perform S202, S216, S530, S541, S543, S560, and S570. In some implementations, the terminal 900 includes the SDP client shown in FIG. 3.

The processor 901 is, for example, a general-purpose central processing unit (central processing unit, CPU), a network processor (network processor, NP), a graphics processing unit (graphics processing unit, GPU), a neural network processing unit (neural network processing unit, NPU), a data processing unit (data processing unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The memory 902 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that is accessible by a computer, but is not limited thereto. Optionally, the memory 902 exists independently, and is connected to the processor 901 through an internal connection 904. Alternatively, the memory 902 and the processor 901 are optionally integrated together.

The network interface 903 is configured to communicate with another device or a communication network by using any transceiver-type apparatus. The network interface 903 includes, for example, at least one of a wired network interface or a wireless network interface. The wired network interface is, for example, an ethernet interface. The ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 901 includes one or more CPUs, for example, a CPU 0 and a CPU 1 shown in FIG. 9.

In some embodiments, the terminal 900 optionally includes a plurality of processors, for example, a processor 901 and a processor 905 shown in FIG. 9. Each of these processors is, for example, a single-core processor (single-CPU) or a multi-core processor (multi-CPU). The processor herein is optionally one or more devices, circuits, and/or processing cores configured to process data (for example, computer program instructions).

In some embodiments, the terminal 900 further includes an internal connection 904. The processor 901, the memory 902, and the at least one network interface 903 are connected through the internal connection 904. The internal connection 904 includes a channel for transmitting information between the foregoing components. Optionally, the internal connection 904 is a board or a bus. Optionally, the internal connection 904 is classified into an address bus, a data bus, a control bus, and the like.

In some embodiments, the terminal 900 further includes an input/output interface 906. The input/output interface 906 is connected to the internal connection 904.

In some embodiments, the input/output interface 906 is configured to be connected to an input device 907, and the input/output interface 906 receives a command or data that is related to the embodiment in FIG. 2 or the embodiment in FIG. 5A and FIG. 5B and that is input by a user through the input device 907, for example, a first user identifier (for example, a user name and/or a password, or a biometric feature). The input device includes but is not limited to a keyboard, a touchscreen, a microphone, a mouse, a sensor device, or the like.

In some embodiments, the input/output interface 906 is further configured to be connected to a display 908. The display 908 is configured to display an authentication interface.

Optionally, the processor 901 implements the methods in the foregoing embodiments by reading the program code stored in the memory 902, or the processor 901 implements the methods in the foregoing embodiments by using program code stored therein. When the processor 901 implements the methods in the foregoing embodiments by reading the program code stored in the memory 902, the memory 902 stores program code 910 for implementing the methods provided in embodiments of this application.

For more details of implementing the foregoing functions by the processor 901, refer to the descriptions in the foregoing method embodiments. Details are not described herein again.

Embodiments in this specification are described in a progressive manner. For same or similar parts in embodiments, refer to each other. Each embodiment focuses on a difference from other embodiments.

That A refers to B means that A is the same as B or that A is a simple variant of B.

In the specification and claims in embodiments of this application, the terms "first", "second", and the like are for distinguishing between different objects, but are not intended to describe a particular order of the objects, and cannot be understood as an indication or implication of relative importance. For example, a first packet and a second packet are used to distinguish between different packets, but are not used to describe a particular sequence of the packets, and it cannot be understood that the first packet is more important than the second packet.

In embodiments of this application, unless otherwise specified, "at least one" means one or more, and "a plurality of" means two or more. For example, a plurality of packets are two or more packets.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or some of the described procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A network application access method, applied to a network system, wherein the network system comprises a terminal, a security protection system, and a server providing a network application, the terminal is deployed in a first network, the server is deployed in a second network, the security protection system is configured to protect security of the server, and the method comprises:
receiving, by the security protection system, a first packet from the terminal, wherein the first packet comprises an application layer packet header, the application layer packet header in the first packet carries a first virtual IP address corresponding to a user identifier, the user identifier is an identifier of a user that logs in to the terminal, and the first virtual IP address is an IP address in the second network;
obtaining, by the security protection system, a second packet based on the first packet, wherein the second packet comprises an IP basic header, and a source IP address field in the IP basic header in the second packet carries the first virtual IP address; and
sending, by the security protection system, the second packet to the server.

2. The method according to claim 1, wherein the first packet further comprises an IP basic header encapsulated in an outer layer of the application layer packet header, and obtaining, by the security protection system, the second packet based on the first packet comprises: replacing, by the security protection system, content of a source IP address field in the IP basic header in the first packet with the first virtual IP address, to obtain the second packet; or
the first packet belongs to a first session, the first session is a session established between the terminal and the security protection system, and obtaining, by the security protection system, the second packet based on the first packet comprises: replacing, by the security protection system, content of a source IP address field in an IP basic header in a subsequent packet of the first packet in the first session with the first virtual IP address, to obtain the second packet.

3. The method according to claim 1, wherein before receiving, by the security protection system, the first packet from the terminal, the method further comprises:
receiving, by the security protection system, an authentication request packet from the terminal, wherein the authentication request packet comprises the user identifier;
performing, by the security protection system, authentication on the terminal based on the authentication request packet;
in response to the terminal passing the authentication, obtaining, by the security protection system, the first virtual IP address based on the user identifier; and
sending, by the security protection system, the first virtual IP address to the terminal during an authorization process of the terminal.

4. The method according to claim 3, wherein obtaining, by the security protection system, the first virtual IP address based on the user identifier comprises:
searching, by the security protection system, a target correspondence based on the user identifier, to obtain the first virtual IP address, wherein the target correspondence comprises the user identifier and the first virtual IP address.

5. The method according to claim 3, wherein obtaining, by the security protection system, the first virtual IP address based on the user identifier comprises:
sending, by the security protection system, the user identifier to a third-party authentication system; and
receiving, by the security protection system, the first virtual IP address from the third-party authentication system.

6. The method according to claim 3, wherein sending, by the security protection system, the first virtual IP address to the terminal comprises:
sending, by the security protection system to the terminal, the first virtual IP address and a resource list that the security protection system authorizes the user to access, wherein the resource list comprises an identifier of the network application, an identifier of the server corresponding to the identifier of the network application, an IP address of an SDP gateway, and a port number of the SDP gateway, and the terminal is capable of accessing the network application based on the IP address of the SDP gateway and the port number of the SDP gateway.

7. The method according to claim 6, wherein the authentication request packet comprises an HTTP request packet, and sending, by the security protection system to the terminal, the first virtual IP address and the resource list that the security protection system authorizes the user to access comprises:
sending, by the security protection system, an HTTP response packet corresponding to the HTTP request packet to the terminal, wherein a response body in the HTTP response packet carries the first virtual IP address and the resource list.

8. The method according to any one of claims 1 to 7, wherein the first packet is an HTTP connect packet, the application layer packet header is an HTTP header, the HTTP header comprises an X-Forwarded-For field, and the first virtual IP address is carried in the X-Forwarded-For field.

9. The method according to claim 1, wherein the first packet further comprises an IP basic header encapsulated in an outer layer of the application layer packet header, a source IP address field in the IP basic header in the first packet carries an IP address of the terminal, and after receiving, by the security protection system, the first packet from the terminal, the method further comprises:
storing, by the security protection system, a session relationship, wherein the session relationship comprises the IP address of the terminal and the first virtual IP address.

10. The method according to claim 9, wherein after sending, by the security protection system, the second packet to the server, the method further comprises:
receiving, by the security protection system, a third packet from the server, wherein the third packet comprises an IP basic header, and a destination IP address field in the IP basic header in the third packet carries the first virtual IP address;
searching, by the security protection system, the session relationship based on the first virtual IP address, to obtain the IP address of the terminal;
obtaining, by the security protection system, a fourth packet based on the IP address of the terminal and the third packet, wherein the fourth packet comprises an IP basic header, and a destination IP address field in the IP basic header in the fourth packet carries the IP address of the terminal; and
sending, by the security protection system, the fourth packet to the terminal.

11. The method according to claim 1, wherein the terminal comprises an SDP client, and the security protection system comprises an SDP controller and an SDP gateway running in an access proxy mode.

12. The method according to claim 1, wherein the network system further comprises an audit tracing system, and after sending, by the security protection system, the second packet to the server, the method further comprises:
determining, by the audit tracing system, the user identifier based on the first virtual IP address.

13. A network application access method, applied to a network system, wherein the network system comprises a terminal, a security protection system, and a server providing a network application, the terminal is deployed in a first network, the server is deployed in a second network, the security protection system is configured to protect security of the server, and the method comprises:
sending, by the terminal, an authentication request packet to the security protection system, wherein the authentication request packet comprises a user identifier, and the user identifier is an identifier of a user that logs in to the terminal;
receiving, by the terminal, a first virtual IP address corresponding to the user identifier from the security protection system during an authorization process of the terminal, wherein the first virtual IP address is an IP address in the second network;
generating, by the terminal, a first packet based on the first virtual IP address, wherein the first packet comprises an application layer packet header, and the application layer packet header in the first packet carries the first virtual IP address; and
sending, by the terminal, the first packet to the security protection system.

14. The method according to claim 13, wherein the first packet is an HTTP connect packet, the application layer packet header is an HTTP header, the HTTP header comprises an X-Forwarded-For field, and the first virtual IP address is carried in the X-Forwarded-For field.

15. The method according to claim 13, wherein the security protection system comprises an SDP gateway running in an access proxy mode, and receiving, by the terminal, the first virtual IP address from the security protection system comprises:
receiving, by the terminal from the security protection system, the first virtual IP address and a resource list that the security protection system authorizes the user to access, wherein the resource list comprises an identifier of the network application, an identifier of the server corresponding to the identifier of the network application, an IP address of the SDP gateway, and a port number of the SDP gateway, and the terminal can access the network application based on the IP address of the SDP gateway and the port number of the SDP gateway;
correspondingly, generating, by the terminal, the first packet based on the first virtual IP address comprises:
generating, by the terminal, the first packet based on the first virtual IP address, the proxy gateway list, and the resource list, wherein the first packet further comprises an IP basic header and a transport layer protocol header, a destination address field in the IP basic header in the first packet comprises the IP address of the SDP gateway, a destination port number field in the transport layer protocol header in the first packet comprises the port number of the SDP gateway, the application layer packet header in the first packet further carries the identifier of the network application and the identifier of the server, the IP basic header is encapsulated in the transport layer protocol header and an outer layer of the application layer packet header, and the transport layer protocol header is encapsulated in the outer layer of the application layer packet header; and
sending, by the terminal, the first packet to the security protection system comprises:
sending, by the terminal, the first packet to the SDP gateway.

16. The method according to claim 15, wherein the authentication request packet comprises an HTTP request packet, and receiving, by the terminal from the security protection system, the first virtual IP address, the resource list that the security protection system authorizes the user to access, and the proxy gateway list that the security protection system authorizes the user to access comprises:
receiving, by the terminal, an HTTP response packet corresponding to the HTTP request packet from the security protection system, wherein a response body in the HTTP response packet carries the first virtual IP address, the resource list, and the proxy gateway list.

17. A security protection system, used in a network system, wherein the network system comprises a terminal, the security protection system, and a server providing a network application, the terminal is deployed in a first network, the server is deployed in a second network, the security protection system is configured to protect security of the server, and the security protection system comprises:
a receiving unit, configured to receive a first packet from the terminal, wherein the first packet comprises an application layer packet header, the application layer packet header in the first packet carries a first virtual IP address corresponding to a user identifier, the user identifier is an identifier of a user that logs in to the terminal, and the first virtual IP address is an IP address in the second network;
a processing unit, configured to obtain a second packet based on the first packet, wherein the second packet comprises an IP basic header, and a source IP address field in the IP basic header in the second packet carries the first virtual IP address; and
a sending unit, configured to send the second packet to the server.

18. The security protection system according to claim 17, wherein the receiving unit is further configured to receive an authentication request packet from the terminal, wherein the authentication request packet comprises the user identifier;
the processing unit is further configured to perform authentication on the terminal based on the authentication request packet;
the processing unit is further configured to: in response to the terminal passing the authentication, obtain the first virtual IP address based on the user identifier; and
the sending unit is further configured to send the first virtual IP address to the terminal during an authorization process of the terminal.

19. The security protection system according to claim 17, wherein the sending unit is configured to send, to the terminal, the first virtual IP address and a resource list that the security protection system authorizes the user to access, wherein the resource list comprises an identifier of the network application, an identifier of the server corresponding to the identifier of the network application, an IP address of an SDP gateway, and a port number of the SDP gateway, and the terminal can access the network application based on the IP address of the SDP gateway and the port number of the SDP gateway.

20. A terminal, used in a network system, wherein the network system comprises the terminal, a security protection system, and a server providing a network application, the terminal is deployed in a first network, the server is deployed in a second network, the security protection system is configured to protect security of the server, and the terminal comprises:
a sending unit, configured to send an authentication request packet to the security protection system, wherein the authentication request packet comprises a user identifier, and the user identifier is an identifier of a user that logs in to the terminal;
a receiving unit, configured to receive a first virtual IP address corresponding to the user identifier from the security protection system during an authorization process of the terminal, wherein the first virtual IP address is an IP address in the second network; and
a processing unit, configured to generate a first packet based on the first virtual IP address, wherein the first packet comprises an application layer packet header, and the application layer packet header in the first packet carries the first virtual IP address, wherein
the sending unit is further configured to send the first packet to the security protection system.

21. The terminal according to claim 20, wherein the security protection system comprises an SDP gateway running in an access proxy mode, and the receiving unit is configured to receive, from the security protection system, the first virtual IP address and a resource list that the security protection system authorizes the user to access, wherein the resource list comprises an identifier of the network application, an identifier of the server corresponding to the identifier of the network application, an IP address of the SDP gateway, and a port number of the SDP gateway, and the terminal can access the network application based on the IP address of the SDP gateway and the port number of the SDP gateway;
correspondingly, the processing unit is configured to generate the first packet based on the first virtual IP address, the proxy gateway list, and the resource list, wherein the first packet further comprises an IP basic header and a transport layer protocol header, a destination address field in the IP basic header in the first packet comprises the IP address of the SDP gateway, a destination port number field in the transport layer protocol header in the first packet comprises the port number of the SDP gateway, the application layer packet header in the first packet further carries the identifier of the network application and the identifier of the server, the IP basic header is encapsulated in the transport layer protocol header and an outer layer of the application layer packet header, and the transport layer protocol header is encapsulated in the outer layer of the application layer packet header; and
the sending unit is configured to send the first packet to the SDP gateway.

22. A security protection system, wherein the security protection system comprises a processor, the processor is coupled to a memory, the memory stores at least one computer program instruction, and the at least one computer program instruction is loaded and executed by the processor, so that the security protection system implements the method according to any one of claims 1 to 12.

23. A terminal, wherein the terminal comprises a processor, the processor is coupled to a memory, the memory stores at least one computer program instruction, and the at least one computer program instruction is loaded and executed by the processor, so that the terminal implements the method according to any one of claims 13 to 16.

24. A network system, wherein the network system comprises the security protection system according to claim 22 and the terminal according to claim 23.

25. A computer-readable storage medium, wherein the storage medium stores at least one instruction, and when the instruction is run on a computer, the computer is enabled to perform the method according to any one of claims 1 to 16.

26. A computer program product, wherein the computer program product comprises one or more computer program instructions, and when the computer program instruction is loaded and run by a computer, the computer is enabled to perform the method according to any one of claims 1 to 16.
